# EUROPEAN PATENT APPLICATION

(11) **EP 4 848 712 A1**
(43) Date of publication of application: **02.12.2026**
(21) Application number: 24920629.3
(22) Date of filing: 12.12.2024
(51) Int. Cl.: H04N 19/117, H04N 19/136, H04N 19/176, H04N 19/80, G06N 3/088, H04N 19/82, H04N 19/14

(54) **DEVICE AND METHOD FOR ADAPTIVELY FILTERING IMAGE**

(30) Priority: 23.01.2024 KR 20240010451; 23.01.2024 KR 20240010452; 13.06.2024 KR 20240077159
(71) Applicant: Samsung Electronics Co., Ltd., Suwon-si, Gyeonggi-do 16677 (KR)
(72) Inventor: DINH, Quockhanh, Suwon-si, Gyeonggi-do 16677 (KR); CHOI, Kwangpyo, Suwon-si, Gyeonggi-do 16677 (KR); PIAO, Yinji, Suwon-si, Gyeonggi-do 16677 (KR)
(74) Representative: Appleyard Lees IP LLP
(86) International application number: PCT/KR2024/096831
(87) International publication number: WO 2025/159382

(57) **Abstract**

An image filtering method according to an embodiment comprises the steps of: calculating a first directional feature value and a second directional feature value of the current block in the current image; determining a directional value of the current block on the basis of a comparison result of a first threshold value and a first ratio between a first maximum feature value corresponding to a larger value of the first directional feature value and the second directional feature value and a first minimum feature value corresponding to a smaller value of the first directional feature value and the second directional feature value, and a comparison result of the first maximum feature value and a second threshold value; determining a class corresponding to the current block among a plurality of classes on the basis of the directional value; and filtering samples in the current block by using a filter configured according to the determined class

## Description

### Technical Field

The present disclosure relates to the field of image filtering, and more particularly, to a device and method for adaptively filtering an image by using an image classification result in an image encoding or decoding process.

### Background Art

In image encoding and decoding, an image may be split into blocks, and each of the blocks may be prediction-encoded and prediction-decoded through inter prediction or intra prediction, respectively.

Inter prediction may be a technique for compressing an image by removing temporal redundancy between images. In inter prediction, blocks of a current image may be predicted by using a reference image. A reference block most similar to the current block may be searched for within a certain search range in the reference image. The current block may be predicted based on the reference block, and a residual block may be generated by subtracting a prediction block generated as a prediction result from the current block.

Intra prediction may be a technique for compressing an image by removing spatial redundancy from the image. In intra prediction, a prediction block may be generated based on neighboring pixels of a current block according to an intra prediction mode. A residual block may be generated by subtracting the prediction block from the current block. An intra prediction mode used for generating the prediction block may be signaled to a decoder side in accordance with a predefined method.

The residual block generated through the inter prediction or the intra prediction may be transmitted to a decoder after undergoing transformation and quantization.

An encoder and the decoder may reconstruct the current block by combining the prediction block of the current block with the residual block. The encoder and the decoder may remove artifacts from the current block by applying a deblocking filter and/or an adaptive loop filter to the reconstructed current block.

### Disclosure of Invention

### Solution to Problem

An image filtering method performed by a filtering device, according to an embodiment, may include calculating a first direction feature value and a second direction feature value of a current block within a current image.

The image filtering method performed by the filtering device, according to an embodiment, may include determining a directionality value of the current block based on a result of comparing a first threshold value with a first ratio between a first maximum feature value and a first minimum feature value, and a result of comparing a second threshold value with the first maximum feature value, wherein the first maximum feature value corresponds to a larger one of the first direction feature value and the second direction feature value, and the first minimum feature value corresponds to a smaller one of the first direction feature value and the second direction feature value.

The image filtering method performed by the filtering device, according to an embodiment, may include determining a class corresponding to the current block among a plurality of classes, based on the determined directionality value.

The image filtering method performed by the filtering device, according to an embodiment, may include filtering samples within the current block by using a filter configured according to the determined class.

A filtering device according to an embodiment may include a directionality determination unit configured to calculate a first direction feature value and a second direction feature value of a current block within a current image and determine a directionality value of the current block based on a result of comparing a first threshold value with a first ratio between a first maximum feature value and a first minimum feature value, and a result of comparing a second threshold value with the first maximum feature value, wherein the first maximum feature value corresponds to a larger one of the first direction feature value and the second direction feature value, and the first minimum feature value corresponds to a smaller one of the first direction feature value and the second direction feature value.

The filtering device according to an embodiment may include a class determination unit configured to determine a class corresponding to the current block among a plurality of classes, based on the determined directionality value.

The filtering device according to an embodiment may include a filter unit configured to filter samples within the current block by using a filter configured according to the determined class.

A computer-readable recording medium according to an embodiment may include a bitstream.

In an embodiment, the bitstream may include filter information used to filter a current image according to a filtering method.

In an embodiment, the filtering method may include calculating a first direction feature value and a second direction feature value of a current block within the current image.

In an embodiment, the filtering method may include determining a directionality value of the current block based on a result of comparing a first threshold value with a first ratio between a first maximum feature value and a first minimum feature value, and a result of comparing a second threshold value with the first maximum feature value, wherein the first maximum feature value corresponds to a larger one of the first direction feature value and the second direction feature value, and the first minimum feature value corresponds to a smaller one of the first direction feature value and the second direction feature value.

In an embodiment, the filtering method may include determining a class corresponding to the current block among a plurality of classes, based on the determined directionality value.

In an embodiment, the filtering method may include filtering samples within the current block by using a filter configured according to the determined class.

### Brief Description of Drawings

FIG. 1 is a block diagram of an image decoding apparatus according to an embodiment.
FIG. 2 is a block diagram of an image encoding apparatus according to an embodiment.
FIG. 3 illustrates a process of determining at least one coding unit by splitting a current coding unit, according to an embodiment.
FIG. 4 illustrates a process of determining at least one coding unit by splitting a non-square-shaped coding unit, according to an embodiment.
FIG. 5 illustrates a process of splitting a coding unit based on at least one of block shape information and split shape mode information, according to an embodiment.
FIG. 6 illustrates a method of determining a certain coding unit among an odd number of coding units, according to an embodiment.
FIG. 7 illustrates an order in which a plurality of coding units are processed when the plurality of coding units are determined by splitting a current coding unit, according to an embodiment.
FIG. 8 illustrates a process of, when it is impossible to process coding units in a certain order, determining that a current coding unit is split into an odd number of coding units, according to an embodiment.
FIG. 9 illustrates a process of determining at least one coding unit by splitting a first coding unit, according to an embodiment.
FIG. 10 illustrates that a splittable shape is limited when a non-squared-shaped second coding unit determined by splitting a first coding unit satisfies a certain condition, according to an embodiment.
FIG. 11 illustrates a process of splitting a square-shaped coding unit when split shape mode information is unable to indicate "split into four square-shaped coding units," according to an embodiment.
FIG. 12 illustrates that a processing order between a plurality of coding units may vary depending on a process of splitting a coding unit, according to an embodiment.
FIG. 13 illustrates a process in which, when a coding unit is recursively split to determine a plurality of coding units, a depth of the coding unit is determined as a shape and size of the coding unit change, according to an embodiment.
FIG. 14 illustrates an index (a part index, hereinafter PID) for depth and coding unit distinction, which may be determined according to a shape and size of coding units, according to an embodiment.
FIG. 15 illustrates that a plurality of coding units are determined according to a plurality of certain data units included in a picture, according to an embodiment.
FIG. 16 illustrates coding units that may be determined for each picture when a combination of shapes into which coding units are splittable is different for each picture, according to an embodiment.
FIG. 17 illustrates various shapes of coding units that may be determined based on split shape mode information expressed in binary code, according to an embodiment.
FIG. 18 illustrates other shapes of coding units that may be determined based on split shape mode information expressed in binary code, according to an embodiment.
FIG. 19 is a block diagram of an image encoding and decoding system according to an embodiment.
FIG. 20 is a block diagram illustrating a configuration of a filtering device according to an embodiment.
FIG. 21 is a diagram illustrating a filter according to an embodiment.
FIG. 22 is a block diagram illustrating a configuration of a classifier according to an embodiment.
FIG. 23 is a diagram for describing a method of calculating direction feature values of a current block, according to an embodiment.
FIG. 24 is a diagram for describing a method of determining a directionality value of a current block, according to an embodiment.
FIG. 25 is a diagram for describing a method of determining a directionality value of a current block, according to an embodiment.
FIG. 26 is a diagram for describing a method of determining a directionality value of a current block, according to an embodiment.
FIG. 27 is a diagram for describing a method of classifying a current block based on a sample feature value of a current block, according to an embodiment.
FIG. 28 is a diagram illustrating a histogram of sample feature values, according to an embodiment.
FIG. 29 is a block diagram illustrating a configuration of a classifier according to an embodiment.
FIG. 30 is a diagram illustrating a histogram constructed based on sample feature values calculated from a current image, according to an embodiment.
FIG. 31 is a diagram for describing a method of clustering candidate values based on temporary representative values, according to an embodiment.
FIG. 32 is a diagram for describing a method of determining new temporary representative values in sub-ranges illustrated in FIG. 31.
FIG. 33 is a diagram for describing a method of clustering candidate values based on new temporary representative values illustrated in FIG. 32.
FIG. 34 is a diagram illustrating a look-up table constructed based on a clustering result of candidate values, according to an embodiment.
FIG. 35 is a flowchart for describing an image filtering method according to an embodiment.
FIG. 36 is a flowchart for describing an image filtering method according to an embodiment.

### Best Mode for Carrying out the Invention

An image filtering method performed by a filtering device, according to an embodiment, may include calculating a first direction feature value and a second direction feature value of a current block within a current image.

The image filtering method performed by the filtering device, according to an embodiment, may include determining a directionality value of the current block based on a result of comparing a first threshold value with a first ratio between a first maximum feature value and a first minimum feature value, and a result of comparing a second threshold value with the first maximum feature value, wherein the first maximum feature value corresponds to a larger one of the first direction feature value and the second direction feature value, and the first minimum feature value corresponds to a smaller one of the first direction feature value and the second direction feature value.

The image filtering method performed by the filtering device, according to an embodiment, may include determining a class corresponding to the current block among a plurality of classes, based on the determined directionality value.

The image filtering method performed by the filtering device, according to an embodiment, may include filtering samples within the current block by using a filter configured according to the determined class.

### Mode for the Invention

As the present disclosure allows for various changes and numerous embodiments, embodiments will be illustrated in the drawings and described in detail in the detailed description. However, this is not intended to limit the embodiments of the present disclosure, and the present disclosure includes all modifications, equivalents, and substitutes falling within the spirit and technical scope of various embodiments.

In describing embodiments, when the detailed description of the relevant known technologies is determined to unnecessarily obscure the gist of the present disclosure, the detailed description thereof may be omitted herein. Also, numbers (e.g., first, second, etc.) used in the description of embodiments may correspond to identification symbols for distinguishing one element from another.

Throughout the present disclosure, the expression "at least one of a, b or c" indicates only a, only b, only c, both a and b, both a and c, both b and c, all of a, b, and c, or variations thereof.

In the present disclosure, when one element is referred to as being "connected" or "coupled" to another element, the one element may be directly connected or coupled to the other element, but the elements may be connected or coupled to each other via an intervening element therebetween unless otherwise stated.

An element represented by "unit," "module," etc. in the present disclosure may be one element in which two or more elements are combined, or may be two or more elements into which one element is more subdivided. Also, each of the elements to be described below may additionally perform, in addition to the main function thereof, some or all of the functions that other elements are responsible for, and some of the main functions that the respective elements are responsible for may be performed by other elements.

In the present disclosure, an 'image' may represent a picture, a still image, a frame, a moving image composed of a plurality of consecutive still images, or a video.

In the present disclosure, a 'sample' may refer to data to be processed as data assigned to a sampling location of an image. For example, a pixel in a frame of a spatial domain may correspond to the sample. A unit including a plurality of samples may be defined as a block.

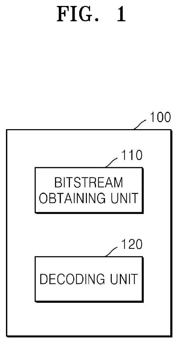

Hereinafter, an image encoding method and apparatus and an image decoding method and apparatus, based on a tree-structured coding unit and a transform unit, according to an embodiment, are disclosed with reference to FIGS. 1 to 19.

FIG. 1 illustrates a block diagram of an image decoding apparatus 100 according to an embodiment.

The image decoding apparatus 100 may include a bitstream obtaining unit 110 and a decoding unit 120. The bitstream obtaining unit 110 and the decoding unit 120 may each include at least one processor. In addition, the bitstream obtaining unit 110 and the decoding unit 120 may each include memory that stores instructions to be performed by the at least one processor.

The bitstream obtaining unit 110 may receive a bitstream. The bitstream includes information about an image encoded by an image encoding apparatus 200 described below. In addition, the bitstream may be transmitted from the image encoding apparatus 200. The image encoding apparatus 200 and the image decoding apparatus 100 may be connected to each other by wire or wirelessly, and the bitstream obtaining unit 110 may receive the bitstream by wire or wirelessly. The bitstream obtaining unit 110 may receive the bitstream from a storage medium, such as an optical media or a hard disk. The decoding unit 120 may reconstruct an image based on information obtained from the received bitstream. The decoding unit 120 may obtain, from the bitstream, a syntax element for reconstructing the image. The decoding unit 120 may reconstruct the image based on the syntax element.

To describe the operation of the image decoding apparatus 100 in detail, the bitstream obtaining unit 110 may receive the bitstream.

The image decoding apparatus 100 may perform an operation of obtaining, from the bitstream, a bin string corresponding to a split shape mode of a coding unit. The image decoding apparatus 100 may perform an operation of determining a splitting rule of a coding unit. In addition, the image decoding apparatus 100 may perform an operation of splitting a coding unit into a plurality of coding units based on at least one of the bin string corresponding to the split shape mode and the splitting rule. To determine the splitting rule, the image decoding apparatus 100 may determine a first allowable range of the size of the coding unit according to the width-to-height ratio of the coding unit. To determine the splitting rule, the image decoding apparatus 100 may determine a second allowable range of the size of the coding unit according to the split shape mode of the coding unit.

Hereinafter, the splitting of the coding unit according to an embodiment of the present disclosure is described in detail.

First, a picture may be divided into one or more slices or one or more tiles. One slice or one tile may be a sequence of one or more coding tree units (CTUs). Depending on the implementation, one slice may include one or more tiles, and one slice may include one or more CTUs. The slice including one or more tiles may be determined within a picture.

As a concept contrasted with the CTU, there is a coding tree block (CTB). The CTB is an NxN block including NxN samples (where N is an integer). Each color component may be divided into one or more CTUs.

When the picture has three sample arrays (sample arrays for Y, Cr, and Cb components), the CTU is a unit that includes a CTB of a luma sample, two CTBs of chroma samples corresponding thereto, and syntax structures used to encode the luma samples and the chroma samples. When the picture is a monochrome picture, the CTU is a unit that includes a CTB of a monochrome sample and syntax structures used to encode monochrome samples. When the picture is a picture encoded as a color plane divided for each color component, the CTU is a unit that includes syntax structures used to encode the picture and samples of the picture.

One CTB may be divided into MxN coding blocks including MxN samples (where M and N are integers).

When the picture has three sample arrays for Y, Cr, and Cb components, a coding unit (CU) is a unit that includes a coding block of a luma sample, two coding blocks of chroma samples corresponding thereto, and syntax structures used to encode the luma samples and the chroma samples. When the picture is a monochrome picture, the CU is a unit that includes a coding block of a monochrome sample and syntax structures used to encode monochrome samples. When the picture is a picture encoded as a color plane divided for each color component, the CU is a unit that includes syntax structures used to encode the picture and samples of the picture.

As described above, the CTB and the CTU are distinct concepts, and the coding block and the CU are distinct concepts. That is, the CU (the CTU) refers to a data structure including the coding block (the CTB) including the corresponding sample and the syntax structure corresponding thereto. However, those of ordinary skill in the art may understand that the CU (the CTU) or the coding block (the CTB) refers to a block of a certain size including a certain number of samples. Therefore, in the following specification, the CTB and the CTU, or the coding block and the CU may be described without distinction unless there are special circumstances.

An image may be divided into CTUs. The size of the CTU may be determined based on information obtained from the bitstream. The shape of the CTUs may be squares with the same size. However, the present disclosure is not limited thereto.

For example, information about a maximum size of a luma coding block may be obtained from the bitstream. For example, the maximum size of the luma coding block indicated by the information about the maximum size of the luma coding block may be one of 4x4, 8x8, 16x16, 32x32, 64x64, 128x128, and 256x256.

For example, information about the maximum size of the luma coding block that may be split into two sub-blocks and the luma block size difference may be obtained from the bitstream. The information about the luma block size difference may indicate the size difference between the luma CTU and the maximum luma coding block that may be split into two. Therefore, the size of the luma CTU may be determined by combining the information about the maximum size of the luma coding block that may be split into two sub-blocks with the information about the luma block size difference, which are obtained from the bitstream. The size of the chroma CTU may also be determined by using the size of the luma CTU. For example, when a Y:Cb:Cr ratio is 4:2:0 according to a color format, the size of the chroma block may be half the size of the luma block, and similarly, the size of the chroma CTU may be half the size of the luma CTU.

According to an embodiment, because information about the maximum size of the luma coding block capable of binary split is obtained from the bitstream, the maximum size of the luma coding block capable of binary split may be variably determined. In contrast, the maximum size of the luma coding block capable of ternary split may be fixed. For example, the maximum size of the luma coding block capable of ternary split in an I picture may be 32x32, and the maximum size of the luma coding block capable of ternary split in a P picture or a B picture may be 64x64.

In addition, the CTU may be hierarchically split into CUs based on the split shape mode information obtained from the bitstream. As the split shape mode information, at least one of information indicating quad split or non-quad split, information indicating multi-split or non-multi-split, split direction information, and split type information may be obtained from the bitstream.

For example, the information indicating quad split or non-quad split may indicate whether a current CU is to be quad split (QUAD_SPLIT) or not to be quad split.

When the current CU is not quad-split, the information indicating multi-split or non-multi-split may indicate whether the current CU will be no longer split (NO_SPLIT) or whether the current CU will be binary/ternary split.

When the current CU is binary split or ternary split, the split direction information indicates that the current CU is split in either a horizontal direction or a vertical direction.

When the current CU is split in the horizontal direction or the vertical direction, the split type information indicates that the current CU is binary split or ternary split.

The split mode of the current CU may be determined according to the split direction information and the split type information. The split mode when the current CU is binary split in the horizontal direction may be determined as binary horizontal split (SPLIT_BT_HOR), the split mode when the current CU is ternary split in the horizontal direction may be determined as ternary horizontal split (SPLIT_TT_HOR), the split mode when the current CU is binary split in the vertical direction may be determined as binary vertical split (SPLIT_BT_VER), and the split mode when the current CU is ternary split in the vertical direction may be determined as ternary vertical split (SPLIT_TT_VER).

The image decoding apparatus 100 may obtain the split shape mode information from the bitstream as one bin string. The form of the bitstream received by the image decoding apparatus 100 may include fixed length binary code, unary code, truncated unary code, predetermined binary code, etc. The bin string represents information as a sequence of binary digits. The bin string may include at least one bit. The image decoding apparatus 100 may obtain split shape mode information corresponding to the bin string based on the splitting rule. The image decoding apparatus 100 may determine whether or not to quad split the CU, the split direction, and the split type based on one bin string.

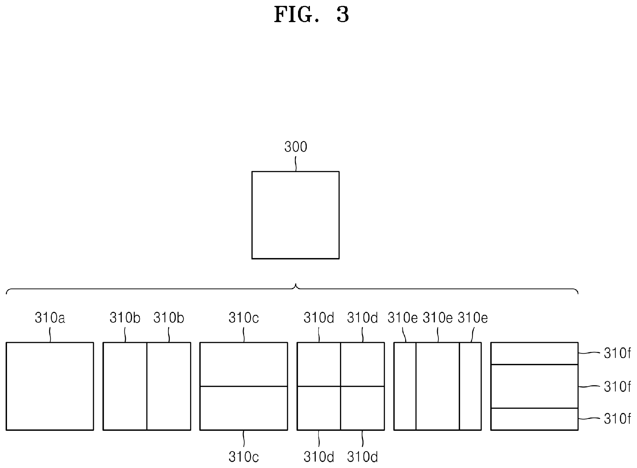

The CU may be less than or equal to the CTU. For example, because the CTU is also a CU with a maximum size, the CTU is one of the CUs. When the split shape mode information for the CTU indicates "not split," the CU determined from the CTU has the same size as the CTU. When the split shape mode information for the CTU indicates "split," the CTU may be split into CUs. In addition, when the split shape mode information for the CU indicates "split," the CUs may be split into CUs with smaller sizes. However, the splitting of the image is not limited thereto, and the CTU and the CU may not be distinguished. The splitting of the CU is described in more detail with reference to FIGS. 3 to 16.

In addition, one or more prediction blocks for prediction may be determined from the CU. The prediction block may be less than or equal to the CU. In addition, one or more transform blocks for transformation may be determined from the CU. The transform block may be less than or equal to the CU.

The shape and size of the transform block and the prediction block may be unrelated.

In another embodiment, prediction may be performed by using the CU as the prediction block. In addition, transformation may be performed by using the CU as the transform block.

The splitting of the CU is described in more detail with reference to FIGS. 3 to 16. A current block and a neighboring block of the present disclosure may represent one of the CTU, the CU, the prediction block, and the transform block. In addition, the current block or the current CU is a block that is currently being decoded or encoded or a block that is currently being split. The neighboring block may be a block that has been reconstructed before the current block. The neighboring block may be spatially or temporally adjacent to the current block. The neighboring block may be positioned on one of a lower left side, a left side, an upper left side, an upper right side, a right side, and a lower right side of the current block.

FIG. 3 illustrates a process in which the image decoding apparatus 100 determines at least one CU by splitting a current CU, according to an embodiment.

The block shape may include 4Nx4N, 4Nx2N, 2Nx4N, 4NxN, Nx4N, 32NxN, Nx32N, 16NxN, Nx16N, 8NxN, or Nx8N. Here, N may be a positive integer. Block shape information is information indicating at least one of a shape, a direction, a width-to-height ratio, or a size of a CU.

The shape of the CU may include a square and a non-square. When the lengths of the width and the height of the CU are equal to each other (that is, when the block shape of the CU is 4Nx4N), the image decoding apparatus 100 may determine the block shape information of the CU as a square. The image decoding apparatus 100 may determine that the shape of the CU is a non-square.

When the lengths of the width and the height of the CU are different from each other (that is, when the block shape of the CU is 4Nx2N, 2Nx4N, 4NxN, Nx4N, 32NxN, Nx32N, 16NxN, Nx16N, 8NxN, or Nx8N), the image decoding apparatus 100 may determine the block shape information of the CU as a non-square. When the shape of the CU is a non-square, the image decoding apparatus 100 may determine the width-to-height ratio among the pieces of block shape information of the CU as at least one of 1:2, 2:1, 1:4, 4:1, 1:8, 8:1, 1:16, 16:1, 1:32, and 32:1. In addition, the image decoding apparatus 100 may determine whether the CU is in the horizontal direction or the vertical direction, based on the lengths of the width and the height of the CU. In addition, the image decoding apparatus 100 may determine the size of the CU based on at least one of the length of the width of the CU, the length of the height of the CU, or the area of the CU.

According to an embodiment, the image decoding apparatus 100 may determine the shape of the CU by using the block shape information, and may determine the shape into which the CU is split by using the split shape mode information. That is, the splitting method of the CU indicated by the split shape mode information may be determined according to what block shape the block shape information used by the image decoding apparatus 100 indicates.

The image decoding apparatus 100 may obtain the split shape mode information from the bitstream. However, the present disclosure is not limited thereto, and the image decoding apparatus 100 and the image encoding apparatus 200 may determine prearranged split shape mode information based on the block shape information. The image decoding apparatus 100 may determine prearranged split type mode information for a CTU or a minimum CU. For example, the image decoding apparatus 100 may determine the split shape mode information for the CTU as quad split. In addition, the image decoding apparatus 100 may determine the split shape mode information for the minimum CU as "not split." Specifically, the image decoding apparatus 100 may determine the size of the CTU as 256x256. The image decoding apparatus 100 may determine the prearranged split type mode information as quad split. The quad split is a split shape mode that bisects both the width and the height of the CU. The image decoding apparatus 100 may obtain a CU with a size of 128x128 from a CTU with a size of 256x256 based on the split shape mode information. In addition, the image decoding apparatus 100 may determine the size of the minimum CU as 4x4. The image decoding apparatus 100 may obtain the split shape mode information indicating "not split" for the minimum CU.

According to an embodiment, the image decoding apparatus 100 may use block shape information indicating that a current CU has a square shape. For example, the image decoding apparatus 100 may determine whether to not split the square-shaped CU, whether to split the square-shaped CU vertically, whether to split the square-shaped CU horizontally, or whether to split the square-shaped CU into four CUs, based on the split shape mode information. Referring to FIG. 3, when block shape information of a current CU 300 indicates a square shape, the decoding unit 120 may not split a CU 310a having the same size as the current CU 300 according to the split shape mode information indicating "not split," or may determine split CUs 310b, 310c, 310d, 310e, 310f, etc. based on the split shape mode information indicating a certain splitting method.

Referring to FIG. 3, the image decoding apparatus 100 may determine two CUs 310b that are split from the current CU 300 in the vertical direction based on the split shape mode information indicating "split in the vertical direction," according to an embodiment. The image decoding apparatus 100 may determine two CUs 310c that are split from the current CU 300 in the horizontal direction based on the split shape mode information indicating "split in the horizontal direction." The image decoding apparatus 100 may determine four CUs 310d that are split from the current CU 300 in the vertical direction and the horizontal direction based on the split shape mode information indicating "split in the vertical direction and the horizontal direction." The image decoding apparatus 100 may determine three CUs 310e that are split from the current CU 300 in the vertical direction based on the split shape mode information indicating "ternary split in the vertical direction," according to an embodiment. The image decoding apparatus 100 may determine three CUs 310f that are split from the current CU 300 in the horizontal direction based on the split shape mode information indicating "ternary split in the horizontal direction." However, the split shape into which the square-shaped CU is splittable should not be interpreted as being limited to the above-described shape, and may include various shapes that may be represented by the split shape mode information. The certain split shapes into which the square-shaped CU is split are described in detail below through various embodiments.

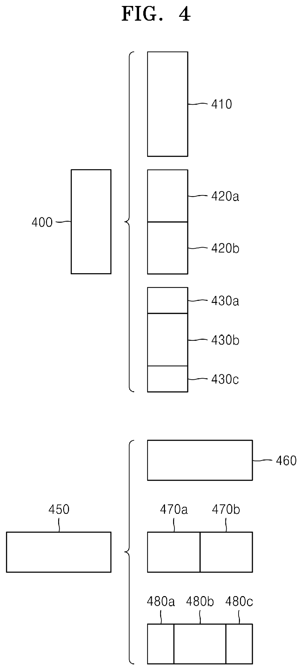

FIG. 4 illustrates a process in which the image decoding apparatus 100 determines at least one CU by splitting a non-square-shaped CU, according to an embodiment.

According to an embodiment, the image decoding apparatus 100 may use block shape information indicating that a current CU has a non-square shape. The image decoding apparatus 100 may determine whether not to split the non-square-shaped current CU or whether to split the non-square-shaped current CU in a certain method, based on the split shape mode information. Referring to FIG. 4, when block shape information of a current CU 400 or 450 indicates a non-square shape, the image decoding apparatus 100 may determine a CU 410 or 460 having the same size as the current CU 400 or 450 according to the split shape mode information indicating "not split," or may determine split CUs 420a, 420b, 430a, 430b, 430c, 470a, 470b, 480a, 480b, and 480c based on the split shape mode information indicating a certain splitting method. The certain splitting method by which the non-square-shaped CU is split is described in detail below through various embodiments.

According to an embodiment, the image decoding apparatus 100 may determine the shape into which the CU is split by using the split shape mode information, and in this case, the split shape mode information may indicate the number of at least one CU generated by splitting the CU. Referring to FIG. 4, when the split shape mode information indicates that the current CU 400 or 450 is split into two CUs, the image decoding apparatus 100 may determine two CUs 420a and 420b or 470a and 470b included in the current CU by splitting the current CU 400 or 450 based on the split shape mode information.

According to an embodiment, when the image decoding apparatus 100 splits the non-square-shaped current CU 400 or 450 based on the split shape mode information, the image decoding apparatus 100 may split the current CU by taking into account the location of the long side of the non-square-shaped current CU 400 or 450. For example, the image decoding apparatus 100 may determine a plurality of CUs by splitting the current CU 400 or 450 in a direction that splits the long side of the current CU 400 or 450 by taking into account the shape of the current CU 400 or 450.

According to an embodiment, when the split shape mode information indicates that the CU is split (ternary split) into an odd number of blocks, the image decoding apparatus 100 may determine an odd number of CUs included in the current CU 400 or 450. For example, when the split shape mode information indicates that the current CU 400 or 450 is split into three CUs, the image decoding apparatus 100 may split the current CU 400 or 450 into three CUs 430a, 430b, and 430c, or 480a, 480b, and 480c.

In an embodiment, the width-to-height ratio of the current CU 400 or 450 may be 4:1 or 1:4. When the width-to-height ratio is 4:1, the block shape information may be the horizontal direction because the width is longer than the height. When the width-to-height ratio is 1:4, the block shape information may be the vertical direction because the width is shorter than the height. The image decoding apparatus 100 may determine to split the current CU into the odd number of blocks based on the split shape mode information. In addition, the image decoding apparatus 100 may determine the split direction of the current CU 400 or 450 based on the block shape information of the current CU 400 or 450. For example, when the current CU 400 is in the vertical direction, the image decoding apparatus 100 may determine the CUs 430a, 430b, and 430c by splitting the current CU 400 in the horizontal direction. In addition, when the current CU 450 is in the horizontal direction, the image decoding apparatus 100 may determine the CUs 480a, 480b, and 480c by splitting the current CU 450 in the vertical direction.

According to an embodiment, the image decoding apparatus 100 may determine the odd number of CUs included in the current CU 400 or 450, and the sizes of the determined CUs may not all be the same. For example, among the determined odd number of CUs 430a, 430b, and 430c, or 480a, 480b, and 480c, the size of the certain CU 430b or 480b may be different from the size of the other CUs 430a and 430c, or 480a and 480c. That is, the CU into which the current CU 400 or 450 may be split and determined may have a plurality of types of sizes, and in some cases, the odd number of CUs 430a, 430b, and 430c, or 480a, 480b, and 480c may have different sizes.

According to an embodiment, when the split shape mode information indicates that the CU is split into an odd number of blocks, the image decoding apparatus 100 may determine an odd number of CUs included in the current CU 400 or 450, and furthermore, the image decoding apparatus 100 may impose predetermined restrictions on at least one CU among the odd number of CUs generated by splitting. Referring to FIG. 4, the image decoding apparatus 100 may perform a decoding process for the CU 430b or 480b, which is positioned in the center among three CUs 430a, 430b, and 430c, or 480a, 480b and 480c generated by splitting the current CU 400 or 450, differently from the other CUs 430a and 430c, or 480a and 480c. For example, the image decoding apparatus 100 may restrict the CU 430b or 480b positioned in the center not to be split any longer, unlike the other CUs 430a and 430c, or 480a and 480c, or may restrict the CU 430b or 480b to be split only a certain number of times.

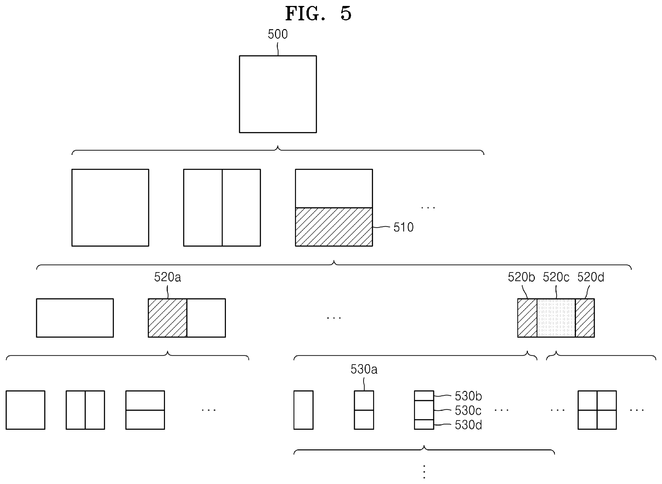

FIG. 5 illustrates a process in which the image decoding apparatus 100 splits a CU based on at least one of block shape information and split shape mode information, according to an embodiment.

According to an embodiment, the image decoding apparatus 100 may determine to split or not to split a square-shaped first CU 500 into CUs based on at least one of block shape information and split shape mode information. According to an embodiment, when the split shape mode information indicates splitting the first CU 500 in the horizontal direction, the image decoding apparatus 100 may determine a second CU 510 by splitting the first CU 500 in the horizontal direction. The first CU, the second CU, and a third CU used according to an embodiment are terms used to understand the relationship before and after splitting between CUs. For example, when the first CU is split, the second CU may be determined, and when the second CU is split, the third CU may be determined. Hereinafter, the relationship between the first CU, the second CU, and the third CU used may be understood as following the above-described characteristics.

According to an embodiment, the image decoding apparatus 100 may determine to split or not split the determined second CU 510 into CUs based on the split shape mode information. Referring to FIG. 5, the image decoding apparatus 100 may split the non-square-shaped second CU 510 determined by splitting the first CU 500 into at least one third CU 520a, 520b, 520c, 520d, etc. based on the split shape mode information, or may not split the second CU 510. The image decoding apparatus 100 may obtain the split shape mode information, the image decoding apparatus 100 may obtain a plurality of second CUs (e.g., 510) of various shapes by splitting the first CU 500 based on the obtained split shape mode information, and the second CU 510 may be split according to the method in which the first CU 500 is split based on the split shape mode information. According to an embodiment, when the first CU 500 is split into the second CU 510 based on the split shape mode information for the first CU 500, the second CU 510 may also be split into the third CU (e.g., 520a, 520b, 520c, 520d, etc.) based on the split shape mode information for the second CU 510. That is, the CU may be recursively split based on the split shape mode information associated with each CU. Therefore, the square-shaped CU may be determined from the non-square-shaped CU, and the square-shaped CU may be recursively split to determine the non-square-shaped CU.

Referring to FIG. 5, a certain CU (e.g., a CU positioned in the center or a square-shaped CU) among an odd number of third CUs 520b, 520c, and 520d determined by splitting the non-square-shaped second CU 510 may be split recursively. According to an embodiment, the non-square-shaped third CU 520b, which is one of the odd number of third CUs 520b, 520c, and 520d, may be horizontally split into a plurality of fourth CUs. The non-square-shaped fourth CU 530b or 530d, which is one of the plurality of fourth CUs 530a, 530b, 530c, and 530d, may be further split into a plurality of CUs. For example, the non-square-shaped fourth CU 530b or 530d may be further split into an odd number of CUs. Methods that may be used for recursive splitting of CUs are described below with reference to various embodiments.

According to an embodiment, the image decoding apparatus 100 may split each of the third CUs 520a, 520b, 520c, 520d, etc. into CUs based on the split shape mode information. In addition, the image decoding apparatus 100 may determine not to split the second CU 510 based on the split shape mode information. According to an embodiment, the image decoding apparatus 100 may split the non-square-shaped second CU 510 into the odd number of third CUs 520b, 520c, and 520d. The image decoding apparatus 100 may impose certain restrictions on a certain third CU among the odd number of third CUs 520b, 520c, and 520d. For example, the image decoding apparatus 100 may restrict the CU 520c positioned in the center among the odd number of third CUs 520b, 520c, and 520d not to be split any longer, or may restrict the CU 520c to be split a settable number of times.

Referring to FIG. 5, the image decoding apparatus 100 may restrict the CU 520c positioned in the center among the odd number of third CUs 520b, 520c, and 520d included in the non-square-shaped second CU 510 not to be split any longer, or to be split in a certain split shape (e.g., to be split into only four CUs or to be split in a shape corresponding to the split shape of the second CU 510), or to be split only a certain number of times (e.g., to be split only n times, where n>0). However, the above restriction on the CU 520c positioned in the center are merely simple embodiments and should not be interpreted as being limited to the above-described embodiments, but should be interpreted as including various restrictions that allow the CU 520c positioned in the center to be decoded differently from the other CUs 520b and 520d.

According to an embodiment, the image decoding apparatus 100 may obtain, from a certain location within the current CU, the split shape mode information used to split the current CU.

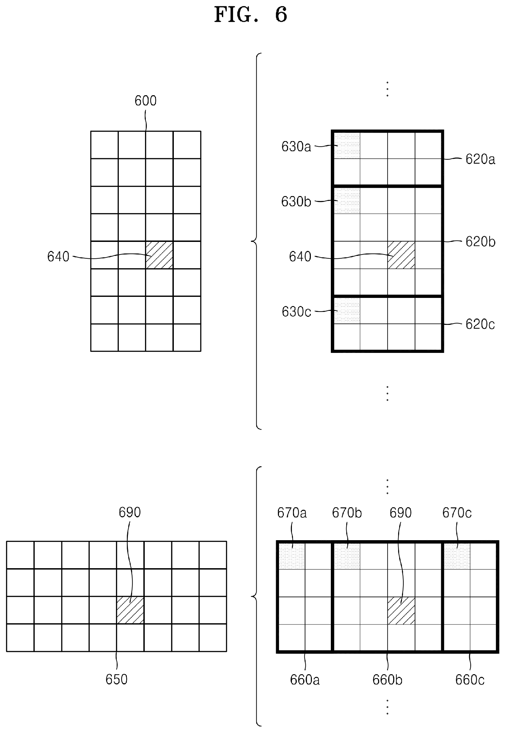

FIG. 6 illustrates a method, performed by the image decoding apparatus 100, of determining a certain CU among an odd number of CUs, according to an embodiment.

Referring to FIG. 6, split shape mode information of a current CU 600 or 650 may be obtained from a sample of a certain location among a plurality of samples included in the current CU 600 or 650 (e.g., a sample 640 or 690 positioned in the center). However, the certain location within the current CU 600 where at least one piece of the split shape mode information may be obtained should not be interpreted as being limited to the center position illustrated in FIG. 6, but should be interpreted as including various locations that may be included within the current CU 600 (e.g., top, bottom, left, right, top left, bottom left, top right, or bottom right, etc.). The image decoding apparatus 100 may obtain the split shape mode information obtained from the certain location and determine to split or not to split the current CU into CUs with various shapes and sizes.

According to an embodiment, when the current CU is split into a certain number of CUs, the image decoding apparatus 100 may select one of the CUs. There may be various methods of selecting one of the plurality of CUs, and such methods are described below with reference to various embodiments provided below.

According to an embodiment, the image decoding apparatus 100 may split a current CU into a plurality of CUs and determine a CU of a certain location.

According to an embodiment, the image decoding apparatus 100 may use information indicating the location of each of an odd number of CUs to determine the CU positioned in the center among the odd number of CUs. Referring to FIG. 6, the image decoding apparatus 100 may determine an odd number of CUs 620a, 620b, and 620c or an odd number of CUs 660a, 660b, and 660c by splitting the current CU 600 or the current CU 650. The image decoding apparatus 100 may determine the central CU 620b or the central CU 660b by using information about the locations of the odd number of CUs 620a, 620b, and 620c or the odd number of CUs 660a, 660b, and 660c. For example, the image decoding apparatus 100 may determine the CU 620b positioned in the center by determining the locations of the CUs 620a, 620b, and 620c based on information indicating the locations of certain samples included in the CUs 620a, 620b, and 620c. Specifically, the image decoding apparatus 100 may determine the CU 620b positioned in the center by determining the locations of the CUs 620a, 620b, and 620c based on information indicating the locations of the top left samples 630a, 630b, and 630c of the CUs 620a, 620b, and 620c.

According to an embodiment, the information indicating the locations of the top left samples 630a, 630b, and 630c respectively included in the CUs 620a, 620b, and 620c may include information about the location or coordinates of the CUs 620a, 620b, and 620c within the picture. According to an embodiment, the information indicating the locations of the top left samples 630a, 630b, and 630c respectively included in the CUs 620a, 620b, and 620c may include information indicating the width or the height of the CUs 620a, 620b, and 620c included in the current CU 600, and the width or the height may correspond to information indicating the difference between coordinates of the CUs 620a, 620b, and 620c within the picture. That is, the image decoding apparatus 100 may determine the CU 620b positioned in the center by directly using the information about the locations or coordinates of the CUs 620a, 620b, and 620c within the picture or by using the information about the width or the height of the CU corresponding to the difference between the coordinates.

According to an embodiment, information indicating the location of the top left sample 630a of the top CU 620a may indicate (xa, ya) coordinates, information indicating the location of the top left sample 630b of the central CU 620b may indicate (xb, yb) coordinates, and information indicating the location of the top left sample 630c of the bottom CU 620c may indicate (xc, yc) coordinates. The image decoding apparatus 100 may determine the central CU 620b by using the coordinates of the top left samples 630a, 630b, and 630c respectively included in the CUs 620a, 620b, and 620c. For example, when the coordinates of the top left samples 630a, 630b, and 630c are sorted in ascending or descending order, the CU 620b including the coordinates (xb, yb) of the sample 630b positioned in the center may be determined as the CU positioned in the center among the CUs 620a, 620b, and 620c determined by splitting the current CU 600. However, the coordinates indicating the locations of the top left samples 630a, 630b, and 630c may indicate coordinates indicating an absolute location within the picture, and furthermore, based on the location of the top left sample 630a of the top CU 620a, the (dxb, dyb) coordinates, which are information indicating the relative location of the top left sample 630b of the central CU 620b, and the (dxc, dyc) coordinates, which are information indicating the relative location of the top left sample 630c of the bottom CU 620c, may be used. In addition, the method of determining the CU of the certain location by using the coordinates of the sample as the information indicating the location of the sample included in the CU should not be interpreted as being limited to the above-described method, but should be interpreted as various arithmetic methods that may use the coordinates of the sample.

According to an embodiment, the image decoding apparatus 100 may split the current CU 600 into the plurality of CUs 620a, 620b, and 620c, and may select a CU among the CUs 620a, 620b, and 620c in accordance with a certain criterion. For example, the image decoding apparatus 100 may select the CU 620b having a different size among the CUs 620a, 620b, and 620c.

According to an embodiment, the image decoding apparatus 100 may determine the width or the height of each of the CUs 620a, 620b, and 620c by using the (xa, ya) coordinate, which is information indicating the location of the top left sample 630a of the top CU 620a, the (xb, yb) coordinate, which is information indicating the location of the top left sample 630b of the central CU 620b, and the (xc, yc) coordinate, which is information indicating the location of the top left sample 630c of the bottom CU 620c. The image decoding apparatus 100 may determine the size of each of the CUs 620a, 620b, and 620c by using (xa, ya), (xb, yb), and (xc, yc) coordinates indicating the locations of the CUs 620a, 620b, and 620c. According to an embodiment, the image decoding apparatus 100 may determine the width of the top CU 620a as the width of the current CU 600. The image decoding apparatus 100 may determine the height of the top CU 620a as yb-ya. According to an embodiment, the image decoding apparatus 100 may determine the width of the central CU 620b as the width of the current CU 600. The image decoding apparatus 100 may determine the height of the central CU 620b as yc-yb. According to an embodiment, the image decoding apparatus 100 may determine the width or the height of the bottom CU by using the width or the height of the current CU and the widths and heights of the top CU 620a and the central CU 620b. The image decoding apparatus 100 may determine a CU having a different size from the sizes of the other CUs based on the determined widths and heights of the CUs 620a, 620b, and 620c. Referring to FIG. 6, the image decoding apparatus 100 may determine the central CU 620b having a size different from the sizes of the top CU 620a and the bottom CU 620c as the CU of the certain location. However, because the above-described process in which the image decoding apparatus 100 determines a CU having a different size from the sizes of the other CUs is merely an embodiment of determining a CU of at a certain location by using the size of the CU determined based on sample coordinates, various processes of determining a CU of a certain location by comparing the sizes of the CUs determined according to certain sample coordinates may be used.

The image decoding apparatus 100 may determine the width or the height of each of the CUs 660a, 660b, and 660c by using (xd, yd) coordinates, which are information indicating a location of a top left sample 670a of the left CU 660a, (xe, ye) coordinates, which are information indicating a location of a top left sample 670b of the central CU 660b, and (xf, yf) coordinates, which are information indicating a location of a top left sample 670c of the right CU 660c. The image decoding apparatus 100 may determine the size of each of the CUs 660a, 660b, and 660c by using the (xd, yd), (xe, ye), and (xf, yf) coordinates indicating the locations of the CUs 660a, 660b, and 660c.

According to an embodiment, the image decoding apparatus 100 may determine the width of the left CU 660a as xe-xd. The image decoding apparatus 100 may determine the height of the left CU 660a as the height of the current CU 650. According to an embodiment, the image decoding apparatus 100 may determine the width of the central CU 660b as xf-xe. The image decoding apparatus 100 may determine the height of the central CU 660b as the height of the current CU 600. According to an embodiment, the image decoding apparatus 100 may determine the width or the height of the right CU 660c by using the width or the height of the current CU 650 and the widths and heights of the left CU 660a and the central CU 660b. The image decoding apparatus 100 may determine a CU having a different size from the sizes of the other CUs based on the determined widths and heights of the CUs 660a, 660b, and 660c. Referring to FIG. 6, the image decoding apparatus 100 may determine the central CU 660b having a size different from the sizes of the left CU 660a and the right CU 660c as the CU of the certain location. However, because the above-described process in which the image decoding apparatus 100 determines a CU having a different size from the sizes of the other CUs is merely an embodiment of determining a CU of at a certain location by using the size of the CU determined based on sample coordinates, various processes of determining a CU of a certain location by comparing the sizes of the CUs determined according to certain sample coordinates may be used.

However, the location of the sample considered for determining the location of the CU should not be interpreted as being limited to the top left described above, and it may be interpreted that information about the location of any sample included in the CU may be used.

According to an embodiment, the image decoding apparatus 100 may select a CU of a certain location among the odd number of CUs determined by splitting the current CU, taking into account the shape of the current CU. For example, when the current CU is a non-square shape with a width longer than a height, the image decoding apparatus 100 may determine a CU of a certain location along the horizontal direction. That is, the image decoding apparatus 100 may determine one of the CUs that have different locations in the horizontal direction and may impose restrictions on the corresponding CU. When the current CU is a non-square shape with a height longer than a width, the image decoding apparatus 100 may determine a CU of a certain location along the vertical direction. That is, the image decoding apparatus 100 may determine one of the CUs that have different locations in the vertical direction and may impose restrictions on the corresponding CU.

According to an embodiment, the image decoding apparatus 100 may use information indicating the location of each of an even number of CUs to determine a CU of a certain location among the even number of CUs. The image decoding apparatus 100 may determine the even number of CUs by splitting (binary splitting) the current CU and may determine a CU of a certain location by using information about the locations of the even number of CUs. In this regard, a specific process may be a process corresponding to the process of determining the CU of the certain location (e.g., the central location) among the odd number of CUs described above with reference to FIG. 6, and thus, the specific process is omitted.

According to an embodiment, when a non-square-shaped current CU is split into a plurality of CUs, certain information about a CU of a certain location may be used in a splitting process so as to determine the CU of the certain location among the plurality of CUs. For example, the image decoding apparatus 100 may use at least one of block shape information and split shape mode information stored in the sample included in the central CU in the splitting process so as to determine the CU positioned in the center among the plurality of CUs into which the current CU is split.

Referring to FIG. 6, the image decoding apparatus 100 may split the current CU 600 into the plurality of CUs 620a, 620b, and 620c based on the split shape mode information, and may determine the CU 620b positioned in the center among the plurality of CUs 620a, 620b, and 620c. Furthermore, the image decoding apparatus 100 may determine the CU 620b positioned in the center by taking into account the location where the split shape mode information is obtained. That is, the split shape mode information of the current CU 600 may be obtained from the sample 640 positioned in the center of the current CU 600. When the current CU 600 is split into the plurality of CUs 620a, 620b, and 620c based on the split shape mode information, the CU 620b including the sample 640 may be determined as the CU positioned in the center. However, the information used to determine the CU positioned in the center should not be interpreted as being limited to the split type mode information, and various types of information may be used in the process of determining the CU positioned in the center.

According to an embodiment, certain information for identifying a CU of a certain location may be obtained from a certain sample included in a CU to be determined. Referring to FIG. 6, the image decoding apparatus 100 may use the split shape mode information obtained from the sample of the certain location within the current CU 600 (e.g., the sample positioned in the center of the current CU 600) so as to determine the CU of the certain location among the plurality of CUs 620a, 620b, and 620c into which the current CU 600 is split (e.g., the CU positioned in the center among the plurality of split CUs). That is, the image decoding apparatus 100 may determine the sample of the certain location by taking into account the block shape of the current CU 600, and the image decoding apparatus 100 may impose certain restrictions by determining the CU 620b including the sample from which certain information (e.g., the split shape mode information) may be obtained, among the plurality of CUs 620a, 620b, and 620c determined by splitting the current CU 600. Referring to FIG. 6, according to an embodiment, the image decoding apparatus 100 may determine the sample 640 positioned in the center of the current CU 600 as the sample from which certain information may be obtained, and the image decoding apparatus 100 may impose certain restrictions on the process of decoding the CU 620b including the sample 640. However, the location of the sample from which certain information may be obtained should not be interpreted as being limited to the above-described location, but may be interpreted as samples of any location included in the CU 620b to be determined so as to impose restrictions thereon.

According to an embodiment, the location of the sample from which certain information may be obtained may be determined according to the shape of the current CU 600. According to an embodiment, the block shape information may determine whether the shape of the current CU is a square or a non-square, and may determine the location of the sample from which certain information may be obtained according to the shape. For example, the image decoding apparatus 100 may determine a sample positioned on a boundary that divides at least one of the width and the height of the current CU into halves as the sample from which certain information may be obtained, by using at least one of information about the width of the current CU and information about the height of the current CU. As another example, when the block shape information related to the current CU indicates a non-square shape, the image decoding apparatus 100 may determine one of samples adjacent to a boundary that divides the long side of the current CU into halves as the sample from which certain information may be obtained.

According to an embodiment, when the image decoding apparatus 100 splits the current CU into the plurality of CUs, the image decoding apparatus 100 may use the split shape mode information so as to determine the CU of the certain location among the plurality of CUs. According to an embodiment, the image decoding apparatus 100 may obtain the split shape mode information from the sample of the certain location included in the CU, and the image decoding apparatus 100 may split the plurality of CUs, which are generated by splitting the current CU, by using the split shape mode information obtained from the sample of the certain location included in each of the plurality of CUs. That is, the CU may be recursively split by using the split shape mode information obtained from the sample of the certain location included in each of the CUs. Because the process of recursively splitting the CU has been described above with reference to FIG. 5, a detailed description thereof is omitted.

According to an embodiment, the image decoding apparatus 100 may determine at least one CU by splitting the current CU, and may determine the order in which the at least one CU is decoded according to a certain block (e.g., the current CU).

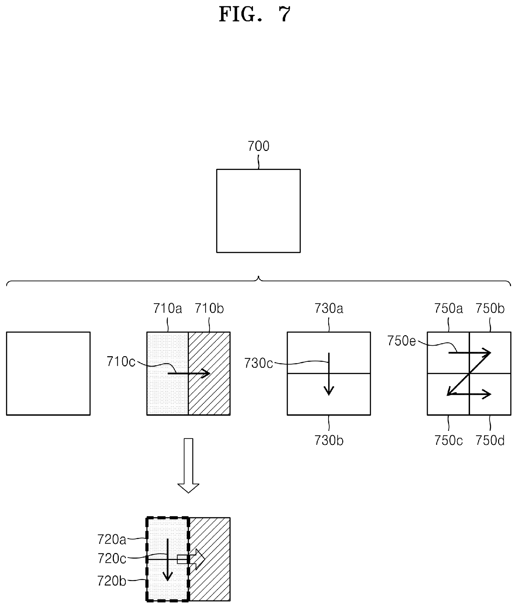

FIG. 7 illustrates an order in which a plurality of CUs are processed when the image decoding apparatus 100 determines the plurality of CUs by splitting a current CU, according to an embodiment.

According to an embodiment, the image decoding apparatus 100 may determine second CUs 710a and 710b by splitting a first CU 700 in the vertical direction, determine second CUs 730a and 730b by splitting the first CU 700 in the horizontal direction, or determine second CUs 750a, 750b, 750c, and 750d by splitting the first CA 700 in the vertical direction and the horizontal direction, according to split shape mode information.

Referring to FIG. 7, the image decoding apparatus 100 may determine the order such that the second CUs 710a and 710b determined by splitting the first CU 700 in the vertical direction are processed in the horizontal direction 710c. The image decoding apparatus 100 may determine, as the vertical direction 730c, the processing order of the second CUs 730a and 730b determined by splitting the first CU 700 in the horizontal direction. The image decoding apparatus 100 may determine the second CUs 750a, 750b, 750c, and 750d determined by splitting the first CU 700 in the vertical direction and the horizontal direction according to a certain order (e.g., a raster scan order 750e or a z scan order) in which CUs positioned in one row are processed and then CUs positioned in a next row are processed.

According to an embodiment, the image decoding apparatus 100 may recursively split the CUs. Referring to FIG. 7, the image decoding apparatus 100 may determine the plurality of CUs 710a, 710b, 730a, 730b, 750a, 750b, 750c, and 750d by splitting the first CU 700, and may recursively split each of the plurality of determined CUs 710a, 710b, 730a, 730b, 750a, 750b, 750c, and 750d. The method of splitting the plurality of CUs 710a, 710b, 730a, 730b, 750a, 750b, 750c, and 750d may be a method corresponding to the method of splitting the first CU 700. Accordingly, each of the plurality of CUs 710a, 710b, 730a, 730b, 750a, 750b, 750c, and 750d may be independently split into a plurality of CUs. Referring to FIG. 7, the image decoding apparatus 100 may determine the second CUs 710a and 710b by splitting the first CU 700 in the vertical direction, and furthermore, may determine to independently split or not to split each of the second CUs 710a and 710b.

According to an embodiment, the image decoding apparatus 100 may split the left second CU 710a in the horizontal direction into third CUs 720a and 720b, and may not split the right second CU 710b.

According to an embodiment, the processing order of the CUs may be determined based on the process of splitting the CUs. In other words, the processing order of the split CUs may be determined based on the processing order of the CUs immediately before being split. The image decoding apparatus 100 may determine the order in which the third CUs 720a and 720b determined by splitting the left second CU 710a are processed, independently of the right second CU 710b. Because the third CUs 720a and 720b are determined by splitting the left second CU 710a in the horizontal direction, the third CUs 720a and 720b may be processed in the vertical direction 720c. In addition, because the order in which the left second CU 710a and the right second CU 710b are processed corresponds to the horizontal direction 710c, the right CU 710b may be processed after the third CUs 720a and 720b included in the left second CU 710a is processed in the vertical direction 720c. The above-described contents are intended to explain the process in which the processing order of the CUs is determined according to the CU before splitting, and therefore, should not be interpreted as being limited to the above-described embodiment, but should be interpreted as being used in various methods by which CUs that are split and determined in various shapes may be independently processed according to a certain order.

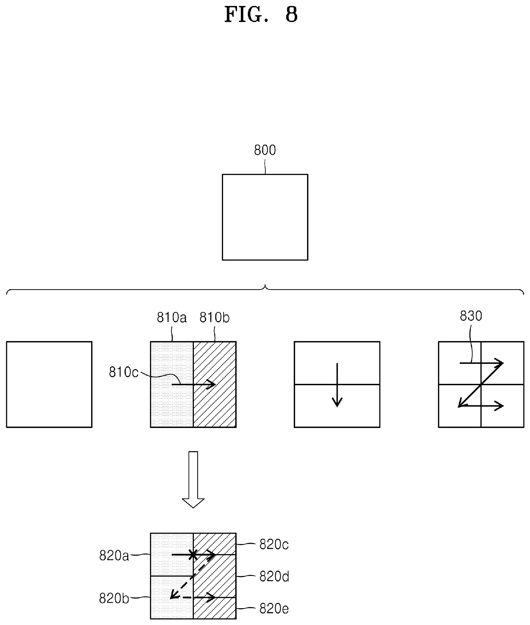

FIG. 8 illustrates a process in which, when it is impossible to process CUs in a certain order, the image decoding apparatus 100 determines that a current CU is split into an odd number of CUs, according to an embodiment.

According to an embodiment, the image decoding apparatus 100 may determine that the current CU is split into the odd number of CUs based on the obtained split shape mode information. Referring to FIG. 8, a square-shaped first CU 800 may be split into non-square-shaped second CUs 810a and 810b, and the second CUs 810a and 810b may be independently split into third CUs 820a, 820b, 820c, 820d, and 820e. According to an embodiment, the image decoding apparatus 100 may determine the plurality of third CUs 820a and 820b by splitting the left CU 810a in the horizontal direction among the second CUs, and the right CU 810b may be split into the odd number of third CUs 820c, 820d, and 820e.

According to an embodiment, the image decoding apparatus 100 may determine the presence or absence of the odd number of split CUs by determining whether the third CUs 820a, 820b, 820c, 820d, and 820e may be processed in a certain order. Referring to FIG. 8, the image decoding apparatus 100 may determine the third CUs 820a, 820b, 820c, 820d, and 820e by recursively splitting the first CU 800. The image decoding apparatus 100 may determine whether the first CU 800, the second CUs 810a and 810b, or the third CUs 820a, 820b, 820c, 820d, and 820e are split into the odd number of CUs among the split shapes, based on at least one of the block shape information and the split shape mode information. For example, the CU positioned on the right side among the second CUs 810a and 810b may be split into the odd number of third CUs 820c, 820d, and 820e. The order in which the plurality of CUs included in the first CU 800 are processed may be a certain order (e.g., a z-scan order 830), and the image decoding apparatus 100 may determine whether the third CUs 820c, 820d, and 820e determined by splitting the right second CU 810b into the odd number of CUs satisfy a condition that the third CUs 820c, 820d, and 820e may be processed according to the certain order.

According to an embodiment, the image decoding apparatus 100 may determine whether the third CUs 820a, 820b, 820c, 820d, and 820e included in the first CU 800 satisfy a condition that the third CUs 820a, 820b, 820c, 820d, and 820e may be processed in the certain order, and the condition is related to whether at least one of the widths and the heights of the second CUs 810a and 810b is divided into halves according to the boundaries of the third CUs 820a, 820b, 820c, 820d, and 820e. For example, the third CUs 820a and 820b determined by dividing the height of the left non-square-shaped second CU 810a into halves may satisfy the condition. Because the boundaries of the third CUs 820c, 820d, and 820e determined by splitting the right second CU 810b into three CUs do not divide the width or the height of the right second CU 810b into halves, it may be determined that the third CUs 820c, 820d, and 820e do not satisfy the condition. When the condition is not satisfied, the image decoding apparatus 100 may determine that there is a disconnection in a scan order, and based on the determination result, may determine that the right second CU 810b is split into the odd number of CUs. According to an embodiment, when the CU is split into the odd number of CUs, the image decoding apparatus 100 may impose certain restrictions on a CU of a certain location among the split CUs. Because the contents of such restrictions, the certain location, etc. have been described above with reference to various embodiments, a detailed description thereof is omitted.

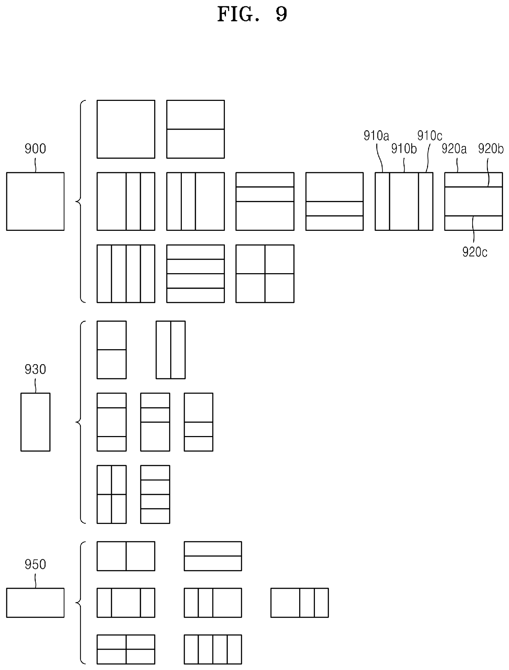

FIG. 9 illustrates a process in which the image decoding apparatus 100 determines at least one CU by splitting a first CU 900, according to an embodiment.

According to an embodiment, the image decoding apparatus 100 may split the first CU 900 based on split shape mode information obtained through the bitstream obtaining unit 110. The square-shaped first CU 900 may be split into four square-shaped CUs, or may be split into a plurality of non-square-shaped CUs. For example, referring to FIG. 9, when the first CU 900 is square and the split shape mode information indicates "split into non-square-shaped CUs," the image decoding apparatus 100 may split the first CU 900 into the plurality of non-square-shaped CUs. Specifically, when the split shape mode information indicates that the first CU 900 is split in the horizontal direction or the vertical direction to determine the odd number of CUs, the image decoding apparatus 100 may split the square-shaped first CU 900 into second CUs 910a, 910b, and 910c determined by splitting the first CU 900 in the vertical direction into the odd number of CUs or second CUs 920a, 920b, and 920c determined by splitting the first CU 900 in the horizontal direction into the odd number of CUs.

According to an embodiment, the image decoding apparatus 100 may determine whether the second CUs 910a, 910b, 910c, 920a, 920b, and 920c included in the first CU 900 satisfy a condition that the second CUs 910a, 910b, 910c, 920a, 920b, and 920c may be processed in a certain order, and the condition is related to whether at least one of the width and the height of the first CU 900 is divided into halves according to the boundaries of the second CUs 910a, 910b, 910c, 920a, 920b, and 920c. Referring to FIG. 9, because the boundaries of the second CUs 910a, 910b, and 910c determined by splitting the square-shaped first CU 900 in the vertical direction do not divide the width of the first CU 900 into halves, it may be determined that the first CU 900 does not satisfy a condition that the first CU 900 may be processed in a certain order. In addition, because the boundaries of the second CUs 920a, 920b, and 920c determined by splitting the square-shaped first CU 900 in the horizontal direction do not divide the height of the first CU 900 into halves, it may be determined that the first CU 900 does not satisfy a condition that the first CU 900 may be processed in a certain order. When the condition is not satisfied, the image decoding apparatus 100 may determine that there is a disconnection in a scan order, and based on the determination result, may determine that the first CU 900 is split into the odd number of CUs. According to an embodiment, when the CU is split into the odd number of CUs, the image decoding apparatus 100 may impose certain restrictions on a CU of a certain location among the split CUs. Because the contents of such restrictions, the certain location, etc. have been described above with reference to various embodiments, a detailed description thereof is omitted.

According to an embodiment, the image decoding apparatus 100 may determine CUs with various shapes by splitting the first CU.

Referring to FIG. 9, the image decoding apparatus 100 may split the square-shaped first CU 900 and the non-square-shaped first CU 930 or 950 into CUs with various shapes.

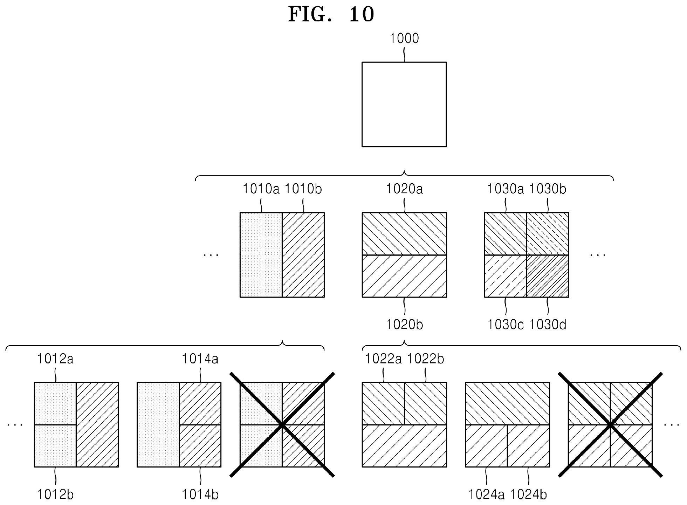

FIG. 10 illustrates that, when a non-square-shaped second CU determined by splitting a first CU 1000 satisfies a certain condition, the image decoding apparatus 100 restricts a shape into which a second CU may be split, according to an embodiment.

According to an embodiment, the image decoding apparatus 100 may determine to split the square-shaped first CU 1000 into non-square-shaped second CUs 1010a, 1010b, 1020a, and 1020b based on split shape mode information obtained through the bitstream obtaining unit 110. The second CUs 1010a, 1010b, 1020a, and 1020b may be independently split. Accordingly, the image decoding apparatus 100 may determine to split or not to split into a plurality of CUs based on split shape mode information related to each of the second CUs 1010a, 1010b, 1020a, and 1020b. According to an embodiment, the image decoding apparatus 100 may determine third CUs 1012a and 1012b by splitting, in the horizontal direction, the non-square-shaped left second CU 1010a determined by splitting the first CU 1000 in the vertical direction. However, when the image decoding apparatus 100 splits the left second CU 1010a in the horizontal direction, the right second CU 1010b may be restricted from being split in the horizontal direction in the same manner as the direction in which the left second CU 1010a is split. When the right second CU 1010b is split in the same direction to determine the third CUs 1014a and 1014b, the left second CU 1010a and the right second CU 1010b may be independently split in the horizontal direction to determine the third CUs 1012a, 1012b, 1014a, and 1014b. However, this is the same result as the image decoding apparatus 100 splitting the first CU 1000 into four square-shaped second CUs 1030a, 1030b, 1030c, and 1030d based on the split shape mode information, which may be inefficient in terms of image decoding.

According to an embodiment, the image decoding apparatus 100 may determine third CUs 1022a, 1022b, 1024a, and 1024b by splitting, in the vertical direction, the non-square-shaped second CU 1020a or 1020b determined by splitting the first CU 1000 in the horizontal direction. However, when the image decoding apparatus 100 splits one of the second CUs (e.g., the top second CU 1020a) in the vertical direction, the other second CU (e.g., the bottom CU 1020b) may be restricted from being split in the vertical direction in the same manner as the direction in which the top second CU 1020a is split, for the reasons described above.

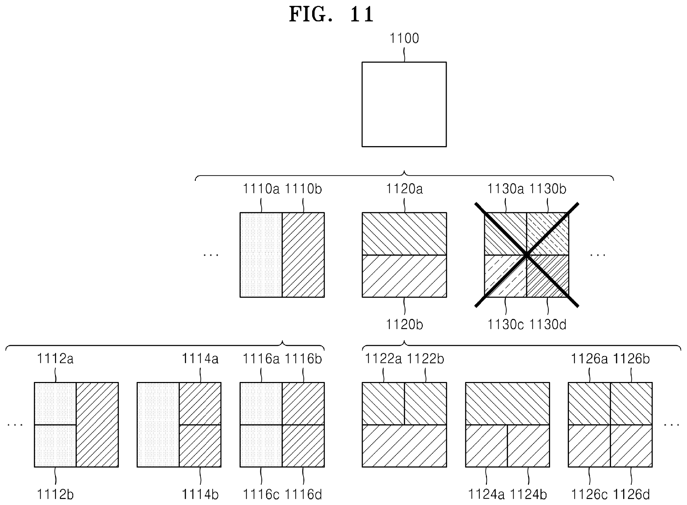

FIG. 11 illustrates a process in which the image decoding apparatus 100 splits a square-shaped CU when split shape mode information is unable to indicate "split into four square-shaped CUs," according to an embodiment.

According to an embodiment, the image decoding apparatus 100 may determine second CUs 1110a, 1110b, 1120a, 1120b, etc. by splitting a first CU 1100 based on split shape mode information. The split shape mode information may include information about various shapes into which the CU may be split, but the information about the various shapes may not always include information for splitting the CU into four square-shaped CUs. According to the split shape mode information, the image decoding apparatus 100 is unable to split the square-shaped first CU 1100 into four square-shaped second CUs 1130a, 1130b, 1130c, and 1130d. Based on the split shape mode information, the image decoding apparatus 100 may determine the non-square-shaped second CUs 1110a, 1110b, 1120a, 1120b, etc.

According to an embodiment, the image decoding apparatus 100 may independently split each of the non-square-shaped second CUs 1110a, 1110b, 1120a, 1120b, etc. Each of the second CUs 1110a, 1110b, 1120a, 1120b, etc. may be split in a certain order through a recursive method, which may be a splitting method corresponding to a method by which the first CU 1100 is split based on the splitting shape mode information.

For example, the image decoding apparatus 100 may determine square-shaped third CUs 1112a and 1112b by splitting the left second CU 1110a in the horizontal direction, and may determine square-shaped third CUs 1114a and 1114b by splitting the right second CU 1110b in the horizontal direction. Furthermore, the image decoding apparatus 100 may determine square-shaped third CUs 1116a, 1116b, 1116c, and 1116d by splitting both the left second CU 1110a and the right second CU 1110b in the horizontal direction. In this case, the CU may be determined in the same shape as the shape in which the first CU 1100 is split into four square-shaped second CUs 1130a, 1130b, 1130c, and 1130d.

As another example, the image decoding apparatus 100 may determine square-shaped third CUs 1122a and 1122b by splitting the top second CU 1120a in the vertical direction, and may determine square-shaped third CUs 1124a and 1124b by splitting the bottom second CU 1120b in the vertical direction. Furthermore, the image decoding apparatus 100 may determine square-shaped third CUs 1126a, 1126b, 1126c, and 1126d by splitting both the top second CU 1120a and the bottom second CU 1120b in the vertical direction. In this case, the CU may be determined in the same shape as the shape in which the first CU 1100 is split into four square-shaped second CUs 1130a, 1130b, 1130c, and 1130d.

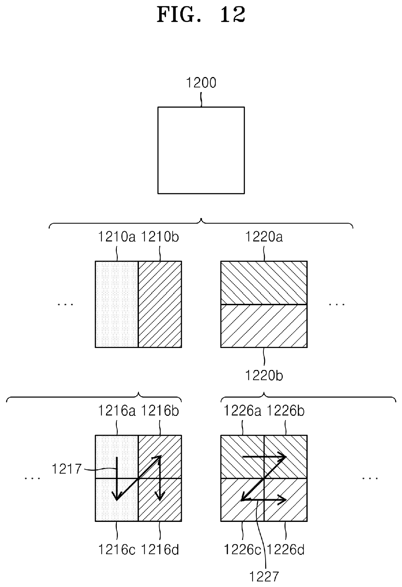

FIG. 12 illustrates that a processing order between a plurality of CUs may vary depending on a process of splitting a CU, according to an embodiment.

According to an embodiment, the image decoding apparatus 100 may split a first CU 1200 based on split shape mode information. When the block shape is a square and the split shape mode information indicates that the first CU 1200 is split in at least one of the horizontal direction and the vertical direction, the image decoding apparatus 100 may determine second CUs (e.g., 1210a, 1210b, 1220a, 1220b, etc.) by splitting the first CU 1200. Referring to FIG. 12, non-square-shaped second CUs 1210a, 1210b, 1220a, and 1220b determined by splitting the first CU 1200 only in the horizontal direction or the vertical direction may be independently split based on the split shape mode information for each thereof. For example, the image decoding apparatus 100 may determine third CUs 1216a, 1216b, 1216c, and 1216d by splitting the second CUs 1210a and 1210b in the horizontal direction, which are generated by splitting the first CU 1200 in the vertical direction, and may determine third CUs 1226a, 1226b, 1226c, and 1226d by splitting the second CUs 1220a and 1220b in the vertical direction, which are generated by splitting the first CU 1200 in the horizontal direction. Because the process of splitting the second CUs 1210a, 1210b, 1220a, and 1220b has been described above with reference to FIG. 11, a detailed description thereof is omitted.

According to an embodiment, the image decoding apparatus 100 may process the CUs in a certain order. Because characteristics of the processing of the CUs according to the certain order have been described above with reference to FIG. 7, a detailed description thereof is omitted. Referring to FIG. 12, the image decoding apparatus 100 may split the square-shaped first CU 1200 to determine four square-shaped third CUs 1216a, 1216b, 1216c, 1216d, 1226a, 1226b, 1226c, and 1226d. According to an embodiment, the image decoding apparatus 100 may determine the processing order of the third CUs 1216a, 1216b, 1216c, 1216d, 1226a, 1226b, 1226c, and 1226d according to the shape into which the first CU 1200 is split.

According to an embodiment, the image decoding apparatus 100 may determine the third CUs 1216a, 1216b, 1216c, and 1216d by splitting the second CUs 1210a and 1210b in the horizontal direction, which are generated by splitting in the vertical direction, and the image decoding apparatus 100 may process the third CUs 1216a, 1216b, 1216c, and 1216d according to an order 1217 of processing the third CUs 1216a and 1216c included in the left second CU 1210a in the vertical direction and then processing the third CUs 1216b and 1216d included in the right second CU 1210b in the vertical direction.

According to an embodiment, the image decoding apparatus 100 may determine the third CUs 1226a, 1226b, 1226c, and 1226d by splitting the second CUs 1220a and 1220b in the vertical direction, which are generated by splitting in the horizontal direction, and the image decoding apparatus 100 may process the third CUs 1226a, 1226b, 1226c, and 1226d according to an order 1227 of processing the third CUs 1226a and 1226c included in the top second CU 1220a in the horizontal direction and then processing the third CUs 1226b and 1226d included in the bottom second CU 1220b in the horizontal direction.

Referring to FIG. 12, the second CUs 1210a, 1210b, 1220a, and 1220b may be respectively split into the square-shaped third CUs 1216a, 1216b, 1216c, 1216d, 1226a, 1226b, 1226c, and 1226d. The second CUs 1210a and 1210b determined by splitting in the vertical direction and the second CUs 1220a and 1220b determined by splitting in the horizontal direction are split into different shapes, but according to the third CUs 1216a, 1216b, 1216c, 1216d, 1226a, 1226b, 1226c, and 1226d determined later, the first CU 1200 is ultimately split into CUs with the same shape. Accordingly, the image decoding apparatus 100 may process the plurality of CUs determined to have the same shape in different orders, even when CUs with the same shape are determined by recursively splitting the CU through different processes based on the split shape mode information.

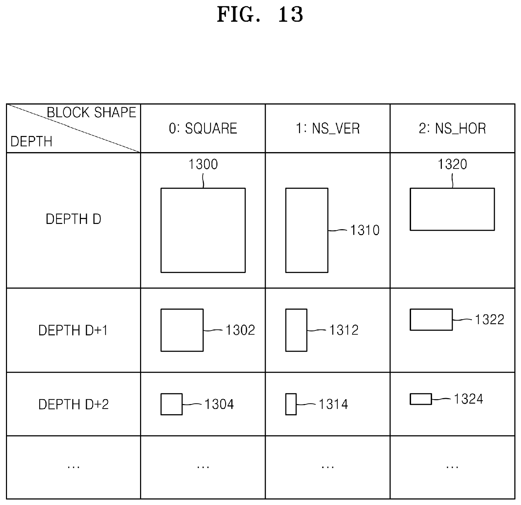

FIG. 13 illustrates a process in which, when a CU is recursively split to determine a plurality of CUs, a depth of the CU is determined as a shape and size of the CU change, according to an embodiment.

According to an embodiment, the image decoding apparatus 100 may determine the depth of the CU in accordance with a certain criterion. For example, the certain criterion may be the length of the long side of the CU. The image decoding apparatus 100 may determine that, when the length of the long side of the current CU is split into 2n (n>0) times the length of the long side of the CU before being split, the depth of the current CU is increased by n, compared to the depth of the CU before being split. Hereinafter, the CU, the depth of which is increased, is expressed as a CU of a lower depth.

Referring to FIG. 13, according to an embodiment, the image decoding apparatus 100 may determine a second CU 1302, a third CU 1304, etc. of a lower depth by splitting a square-shaped first CU 1300, based on block shape information indicating a square shape (for example, the block shape information may indicate '0: SQUARE'). When the size of the square-shaped first CU 1300 is 2Nx2N, the second CU 1302 determined by splitting the width and the height of the first CU 1300 by 1/2 may have a size of NxN. Furthermore, the third CU 1304 determined by splitting the width and the height of the second CU 1302 into 1/2 sizes may have a size of N/2xN/2. In this case, the width and the height of the third CU 1304 correspond to 1/4 times the width and the height of the first CU 1300. When the depth of the first CU 1300 is D, the depth of the second CU 1302 which is 1/2 times the width and the height of the first CU 1300 may be D+1, and the depth of the third CU 1304 which is 1/4 times the width and the height of the first CU 1300 may be D+2.

According to an embodiment, based on block shape information indicating a non-square shape (for example, the block shape information may indicate '1: NS_VER' indicating a non-square shape with a height longer than a width or '2: NS_HOR' indicating a non-square shape with a width longer than a height), the image decoding apparatus 100 may determine the second CU 1312 or 1322, the third CU 1314 or 1324, etc. of a lower depth by splitting the non-square-shaped first CU 1310 or 1320.

The image decoding apparatus 100 may determine the second CU (e.g., 1302, 1312, 1322, etc.) by splitting at least one of the width and the height of the first CU 1310 with a size of Nx2N. That is, the image decoding apparatus 100 may determine the second CU 1302 with a size of NxN or the second CU 1322 with a size of NxN/2 by splitting the first CU 1310 in the horizontal direction, and may also determine the second CU 1312 with a size of N/2xN by splitting in the horizontal direction and the vertical direction.

According to an embodiment, the image decoding apparatus 100 may determine the second CU (e.g., 1302, 1312, 1322, etc.) by splitting at least one of the width and the height of the first CU 1320 with a size of 2NxN. That is, the image decoding apparatus 100 may determine the second CU 1302 with a size of NxN or the second CU 1312 with a size of N/2xN by splitting the first CU 1320 in the vertical direction, and may also determine the second CU 1322 with a size of NxN/2 by splitting in the horizontal direction and the vertical direction.

According to an embodiment, the image decoding apparatus 100 may determine the third CU (e.g., 1304, 1314, 1324, etc.) by splitting at least one of the width and the height of the second CU 1302 with a size of NxN. That is, the image decoding apparatus 100 may split the second CU 1302 in the vertical direction and the horizontal direction to determine the third CU 1304 with a size of N/2xN/2, the third CU 1314 with a size of N/4xN/2, or the third CU 1324 with a size of N/2xN/4.

According to an embodiment, the image decoding apparatus 100 may determine the third CU (e.g., 1304, 1314, 1324, etc.) by splitting at least one of the width and the height of the second CU 1312 with a size of N/2xN. That is, the image decoding apparatus 100 may determine the third CU 1304 with a size of N/2xN/2 or the third CU 1324 with a size of N/2xN/4 by splitting the second CU 1312 in the horizontal direction, and may also determine the third CU 1314 with a size of N/4xN/2 by splitting the second CU 1312 in the vertical direction and the horizontal direction.

According to an embodiment, the image decoding apparatus 100 may determine the third CU (e.g., 1304, 1314, 1324, etc.) by splitting at least one of the width and the height of the second CU 1322 with a size of NxN/2. That is, the image decoding apparatus 100 may determine the third CU 1304 with a size of N/2xN/2 or the third CU 1314 with a size of N/4xN/2 by splitting the second CU 1322 in the vertical direction, and may also determine the third CU 1324 with a size of N/2xN/4 by splitting the second CU 1322 in the vertical direction and the horizontal direction.

According to an embodiment, the image decoding apparatus 100 may split the square-shaped CU (e.g., 1300, 1302, 1304) in the horizontal direction or the vertical direction. For example, the first CU 1310 with a size of Nx2N may be determined by splitting the first CU 1300 with a size of 2Nx2N in the vertical direction, or the first CU 1320 with a size of 2NxN may be determined by splitting the first CU 1300 in the horizontal direction. According to an embodiment, when the depth is determined based on the length of the longest side of the CU, the depth of the CU determined by splitting the first CU 1300 with a size of 2Nx2N in the horizontal direction or the vertical direction may be equal to the depth of the first CU 1300.

In an embodiment, the width and the height of the third CU 1314 or 1324 may be 1/4 times the first CU 1310 or 1320. When the depth of the first CU 1310 or 1320 is D, the depth of the second CU 1312 or 1322, which is 1/2 times the width and the height of the first CU 1310 or 1320, may be D+1, and the depth of the third CU 1314 or 1324, which is 1/4 times the width and the height of the first CU 1310 or 1320 may be D+2.

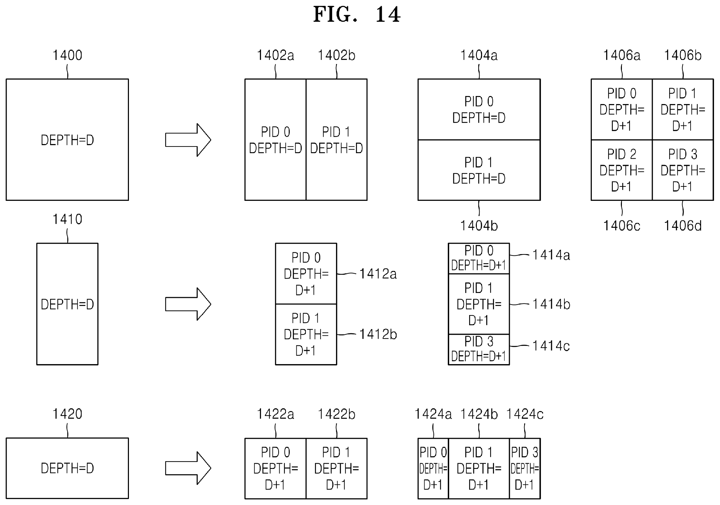

FIG. 14 illustrates an index (a part index, hereinafter PID) for depth and CU distinction, which may be determined according to the shape and size of CUs, according to an embodiment.

According to an embodiment, the image decoding apparatus 100 may determine second CUs with various shapes by splitting a square-shaped first CU 1400. Referring to FIG. 14, the image decoding apparatus 100 may determine second CUs 1402a, 1402b, 1404a, 1404b, 1406a, 1406b, 1406c, and 1406d by splitting the first CU 1400 in at least one of the vertical direction and the horizontal direction according to split shape mode information. That is, the image decoding apparatus 100 may determine the second CUs 1402a, 1402b, 1404a, 1404b, 1406a, 1406b, 1406c, and 1406d based on split shape mode information for the first CU 1400.

According to an embodiment, the depths of the second CUs 1402a, 1402b, 1404a, 1404b, 1406a, 1406b, 1406c, and 1406d determined based on the split shape mode information for the square-shaped first CU 1400 may be determined based on the length of the long side. For example, because the length of one side of the square-shaped first CU 1400 is equal to the length of the long side of the non-square-shaped second CUs 1402a, 1402b, 1404a, and 1404b, the depths of the first CU 1400 and the non-square-shaped second CUs 1402a, 1402b, 1404a, and 1404b may be considered to be equal to D. In contrast, when the image decoding apparatus 100 splits the first CU 1400 into four square-shaped second CUs 1406a, 1406b, 1406c, and 1406d based on the split shape mode information, the length of one side of the square-shaped second CUs 1406a, 1406b, 1406c, and 1406d is 1/2 times the length of one side of the first CU 1400. Thus, the depths of the second CUs 1406a, 1406b, 1406c, and 1406d may be D+1, which is one depth lower than the depth D of the first CU 1400.

According to an embodiment, the image decoding apparatus 100 may split the first CU 1410, which has a height longer than a width, into a plurality of second CUs 1412a, 1412b, 1414a, 1414b, and 1414c in the horizontal direction according to the split shape mode information. According to an embodiment, the image decoding apparatus 100 may split the first CU 1420, which has a width longer than a height, into a plurality of second CUs 1422a, 1422b, 1424a, 1424b, and 1424c in the vertical direction according to the split shape mode information.

According to an embodiment, the depths of the second CUs 1412a, 1412b, 1414a, 1414b, 1422a, 1422b, 1424c, and 1424d determined based on the split shape mode information for the non-square-shaped first CU 1410 or 1420 may be determined based on the length of the long side. For example, because the length of one side of the square-shaped second CUs 1412a and 1412b is 1/2 times the length of one side of the non-square-shaped first CU 1410 having a height longer than a width, the depths of the second CUs 1412a and 1412b are D+1, which is one depth lower than the depth D of the non-square-shaped first CU 1410.

Furthermore, the image decoding apparatus 100 may split the non-square-shaped first CU 1410 into an odd number of second CUs 1414a, 1414b, and 1414c based on the split shape mode information. The odd number of second CUs 1414a, 1414b, and 1414c may include non-square-shaped second CUs 1414a and 1414c and a square-shaped second CU 1414b. In this case, because the length of the long side of the non-square-shaped second CUs 1414a and 1414c and the length of one side of the square-shaped second CU 1414b are 1/2 times the length of one side of the first CU 1410, the depths of the second CUs 1414a, 1414b, and 1414c may be D+1, which is one depth lower than the depth D of the first CU 1410. The image decoding apparatus 100 may determine the depths of the CUs associated with the non-square-shaped first CU 1420 having a width greater than a height by using a method corresponding to the method of determining the depths of the CUs associated with the first CU 1410.

According to an embodiment, when determining an index PID for distinguishing the split CUs, the image decoding apparatus 100 may determine the index based on a size ratio between the CUs when the odd number of split CUs do not have the same size. Referring to FIG. 14, the CU 1414b positioned in the center among the odd number of split CUs 1414a, 1414b, and 1414c may have twice the height of the CUs 1414a and 1414c that have the same width as the other CUs 1414a and 1414c but have different heights from the other CUs 1414a and 1414c. That is, in this case, the CU 1414b positioned in the center may include two different CUs 1414a and 1414c. Accordingly, when the index PID of the CU 1414b positioned in the center according to a scan order is 1, the index of the CU 1414c positioned in a next order may be 3, which is increased by 2. That is, there may be discontinuity in the value of the index. According to an embodiment, the image decoding apparatus 100 may determine whether the odd number of split CUs do not have the same size, based on the presence or absence of discontinuity in the index for distinguishing between the split CUs.

According to an embodiment, the image decoding apparatus 100 may determine whether the CU is split into a specific split shape, based on the value of the index for distinguishing the plurality of CUs determined by splitting from the current CU. Referring to FIG. 14, the image decoding apparatus 100 may determine an even number of CUs 1412a and 1412b or an odd number of CUs 1414a, 1414b, and 1414c by splitting the rectangular first CU 1410 with a height longer than a width. The image decoding apparatus 100 may use the index PID representing each CU so as to distinguish the plurality of CUs. In an embodiment, the PID may be obtained from a sample of a certain location of each CU (e.g., a top left sample).

According to an embodiment, the image decoding apparatus 100 may determine a CU of a certain location among the split and determined CUs by using the index for distinguishing the CUs. According to an embodiment, when the split shape mode information for the rectangular first CU 1410 with a height longer than a width indicates "split into three CUs," the image decoding apparatus 100 may split the first CU 1410 into three CUs 1414a, 1414b, and 1414c. The image decoding apparatus 100 may assign an index to each of the three CUs 1414a, 1414b, and 1414c. The image decoding apparatus 100 may compare the indices for the respective CUs so as to determine the central CU among the CUs split into an odd number. The image decoding apparatus 100 may determine the CU 1414b having an index corresponding to a middle value among the indices of the CUs as a CU of a central location among the CUs determined by splitting the first CU 1410. According to an embodiment, when determining an index for distinguishing the split CUs, the image decoding apparatus 100 may determine the index based on a size ratio between the CUs when the CUs do not have the same size. Referring to FIG. 14, the CU 1414b generated by splitting the first CU 1410 may be twice the height of the CUs 1414a and 1414c that have the same width as the other CUs 1414a and 1414c but have different heights from the other CUs 1414a and 1414c. In this case, when the index PID of the CU 1414b positioned in the center is 1, the index of the CU 1414c positioned in a next order may be 3, which is increased by 2. As in this case, when the index increases uniformly and then the increase amount changes, the image decoding apparatus 100 may determine that the current CU is split into a plurality of CUs including CUs having different sizes from the other CUs. According to an embodiment, when the split shape mode information indicates "split into an odd number of CUs," the image decoding apparatus 100 may split the current CU into a shape in which a CU of a certain location among the odd number of CUs (e.g., a central CU) has a different size from the other CUs. In this case, the image decoding apparatus 100 may determine the central CU having the different size by using the index PID for the CU. However, the index and the size or location of the CU of the certain location to be determined are specific for explaining an embodiment and should not be interpreted as being limited thereto, and should be interpreted as being able to use various indices and locations and sizes of CUs.

According to an embodiment, the image decoding apparatus 100 may use a certain data unit from which recursive splitting of the CU begins.

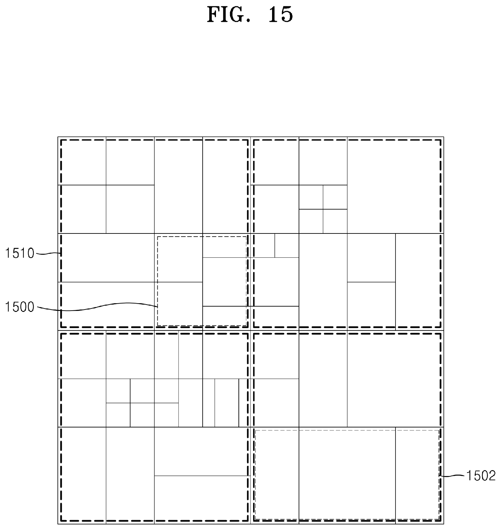

FIG. 15 illustrates that a plurality of CUs are determined according to a plurality of certain data units included in a picture, according to an embodiment.

According to an embodiment, the certain data unit may be defined as a data unit from which the CU begins to be recursively split by using split shape mode information. That is, the certain data unit may correspond to a CU of a highest depth used in a process of determining a plurality of CUs that split a current picture. For convenience of explanation, the certain data units are referred to as reference data units.

According to an embodiment, the reference data unit may represent a certain size and shape. According to an embodiment, the reference data unit may include MxN samples. Here, M and N may be equal to each other, or may be integers expressed as powers of 2. That is, the reference data unit may have a square or a non-square shape, and may be subsequently split into an integer number of CUs.

According to an embodiment, the image decoding apparatus 100 may split the current picture into a plurality of reference data units. According to an embodiment, the image decoding apparatus 100 may split the plurality of reference data units for splitting the current picture by using split shape mode information for each reference data unit. The process of splitting the reference data units may correspond to a splitting process using a quad-tree structure.

According to an embodiment, the image decoding apparatus 100 may predefine a minimum size allowable for the reference data unit included in the current picture. Accordingly, the image decoding apparatus 100 may determine reference data units of various sizes having a size greater than or equal to the minimum size, and may determine at least one CU by using the split shape mode information based on the determined reference data units.

Referring to FIG. 15, the image decoding apparatus 100 may use a square-shaped reference CU 1500, or may use a non-square-shaped reference CU 1502. According to an embodiment, the shape and the size of the reference CU may be determined according to various data units (e.g., sequence, picture, slice, slice segment, tile, tile group, CTU, etc.) that may include at least one reference CU.

According to an embodiment, the bitstream obtaining unit 110 of the image decoding apparatus 100 may obtain at least one of information about the shape of the reference CU and information about the size of the reference CU from the bitstream for each of the various data units. The process of determining at least one CU included in the square-shaped reference CU 1500 has been described above through the process of splitting the current CU 300 of FIG. 3, and the process of determining at least one CU included in the non-square-shaped reference CU 1502 has been described above through the process of splitting the current CU 400 or 450 of FIG. 4, and thus, a detailed description thereof is omitted.

According to an embodiment, the image decoding apparatus 100 may use the index for identifying the size and the shape of the reference CU so as to determine the size and the shape of the reference CU according to some data units predefined based on a certain condition. That is, the bitstream obtaining unit 110 may obtain only an index for identifying the size and the shape of the reference CU for each slice, slice segment, tile, tile group, CTU, etc., among the various data units (e.g., sequence, picture, slice, slice segment, tile, tile group, CTU, etc.) from the bitstream, as the data unit that satisfies the certain condition (e.g., a data unit having a size smaller than a slice). The image decoding apparatus 100 may determine the size and the shape of the reference data unit for each data unit that satisfies the above-described condition by using an index. When information about the shape of the reference CU and information about the size of the reference CU are obtained from the bitstream for each relatively small-sized data unit and used, the usage efficiency of the bitstream may not be good. Therefore, instead of directly obtaining information about the shape of the reference CU and information about the size of the reference CU, only the index may be obtained and used. In this case, at least one of the size and the shape of the reference CU corresponding to the index indicating the size and the shape of the reference CU may be predefined. That is, the image decoding apparatus 100 may determine at least one of the size and the shape of the reference CU included in the data unit, which serves as a basis for obtaining the index, by selecting at least one of the size and the shape of the predefined reference CU according to the index.

According to an embodiment, the image decoding apparatus 100 may use at least one reference CU included in one CTU. That is, the CTU for splitting the image may include at least one reference CU, and the CU may be determined through a process of recursively splitting each reference CU. In an embodiment, at least one of the width and the height of the CTU may be an integer multiple of at least one of the width and the height of the reference CU. According to an embodiment, the size of the reference CU may be the size of the CTU spilt n times according to the quad tree structure. That is, the image decoding apparatus 100 may determine the reference CU by splitting the CTU n times according to the quad tree structure, and may split the reference CU based on at least one of block shape information and split shape mode information according to various embodiments.

According to an embodiment, the image decoding apparatus 100 may obtain, from the bitstream, and use block shape information indicating the shape of the current CU or split shape mode information indicating the method of splitting the current CU. The split shape mode information may be included in the bitstream associated with various data units. For example, the image decoding apparatus 100 may use the split shape mode information included in a sequence parameter set, a picture parameter set, a video parameter set, a slice header, a slice segment header, a tile header, or a tile group header. Furthermore, the image decoding apparatus 100 may obtain, from the bitstream, and use syntax elements corresponding to the block shape information or the split shape mode information for each CTU and reference CU.

Hereinafter, a method of determining a splitting rule, according to an embodiment of the present disclosure, is described in detail.

The image decoding apparatus 100 may determine an image splitting rule. The splitting rule may be predefined between the image decoding apparatus 100 and the image encoding apparatus 200. The image decoding apparatus 100 may determine the image splitting rule based on the information obtained from the bitstream. For example, the image decoding apparatus 100 may determine the splitting rule based on information obtained from at least one of a sequence parameter set, a picture parameter set, a video parameter set, a slice header, a slice segment header, a tile header, or a tile group header. The image decoding apparatus 100 may determine the splitting rule differently according to a frame, a slice, a tile, a temporal layer, a CUT, or a CU.

The image decoding apparatus 100 may determine the splitting rule based on the block shape of the CU. The block shape may include a size, a shape, a width-to-height ratio, and a direction of the CU. The image encoding apparatus 200 and the image decoding apparatus 100 may predefined the splitting rule based on the block shape of the CU. However, the present disclosure is not limited thereto. The image decoding apparatus 100 may determine the splitting rule based on information obtained from the bitstream received from the image encoding apparatus 200.

The shape of the CU may include a square and a non-square. When the width and the height of the CU are equal to each other, the image decoding apparatus 100 may determine that the shape of the CU is a square. In addition, when the width and the height of the CU are not equal to each other, the image decoding apparatus 100 may determine that the shape of the CU is a non-square.

The size of the CU may include various sizes, such as 4x4, 8x4, 4x8, 8x8, 16x4, 16x8, ..., 256x256. The size of the CU may be classified according to the length of the long side, the length of the short side, or the width of the CU. The image decoding apparatus 100 may apply the same splitting rule to the CUs classified into the same group. For example, the image decoding apparatus 100 may classify CUs, the lengths of the long sides of which are equal to each other, into the same size. In addition, the image decoding apparatus 100 may apply the same splitting rule to CUs, the lengths of the long sides of which are equal to each other.

The width-to-height ratio of the CU may include 1:2, 2:1, 1:4, 4:1, 1:8, 8:1, 1:16, 16:1, 32:1, or 1:32. In addition, the direction of the CU may include the horizontal direction and the vertical direction. The horizontal direction may represent a case where the width of the CU is longer than the height of the CU. The vertical direction may represent a case where the width of the CU is shorter than the height of the CU.

The image decoding apparatus 100 may adaptively determine the splitting rule based on the size of the CU. The image decoding apparatus 100 may determine different allowable split shape modes based on the size of the CU. For example, the image decoding apparatus 100 may determine whether splitting is allowed based on the size of the CU. The image decoding apparatus 100 may determine the split direction according to the size of the CU. The image decoding apparatus 100 may determine an allowable split type according to the size of the CU.

Determining the splitting rule based on the size of the CU may be a splitting rule predefined between the image encoding apparatus 200 and the image decoding apparatus 100. In addition, the image decoding apparatus 100 may determine the splitting rule based on the information obtained from the bitstream.

The image decoding apparatus 100 may adaptively determine the splitting rule based on the location of the CU. The image decoding apparatus 100 may adaptively determine the splitting rule based on the location the CU occupies in the image.

In addition, the image decoding apparatus 100 may determine the splitting rule so that CUs generated through different splitting paths do not have the same block shape. However, the present disclosure is not limited thereto, and the CUs generated through different splitting paths may have the same block shape. The CUs generated through different splitting paths may have different decoding processing orders. Because the decoding processing order has been described in conjunction with FIG. 12, a detailed description thereof is omitted.

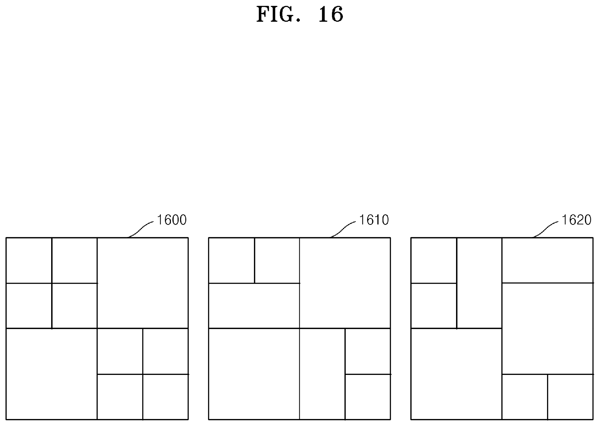

FIG. 16 illustrates CUs that may be determined for each picture when a combination of shapes into which CUs are splittable is different for each picture, according to an embodiment.

Referring to FIG. 16, the image decoding apparatus 100 may determine different combinations of split shapes into which a CU is splittable for each picture. For example, the image decoding apparatus 100 may decode an image by using a picture 1600 that may be split into four CUs among at least one picture included in the image, a picture 1610 that may be split into two or four CUs, and a picture 1620 that may be split into two, three, or four CUs. The image decoding apparatus 100 may use only the split shape information indicating "split into four square-shaped CUs" so as to split the picture 1600 into a plurality of CUs. The image decoding apparatus 100 may use only the split shape information indicating "split into two or four CUs" so as to split the picture 1610. The image decoding apparatus 100 may use only the split shape information indicating "split into two, three, or four CUs" so as to split the picture 1620. The above-described combinations of the split shapes are merely an embodiment for explaining the operation of the image decoding apparatus 100. Therefore, the above-described combinations of the split shapes should not be interpreted as being limited to the embodiment, but should be interpreted as being able to use various combinations of split shapes for each certain data unit.

According to an embodiment, the bitstream obtaining unit 110 of the image decoding apparatus 100 may obtain a bitstream including an index indicating the combination of the split shape information for each certain data unit (e.g., sequence, picture, slice, slice segment, tile, or tile group, etc.). For example, the bitstream obtaining unit 110 may obtain an index indicating the combination of the split shape information from a sequence parameter set, a picture parameter set, a slice header, a tile header, or a tile group header. The image decoding apparatus 100 may determine the combinations of the split shapes into which the CU is splittable for each certain data unit by using the obtained index, and accordingly, different combinations of split shapes may be used for each certain data unit.

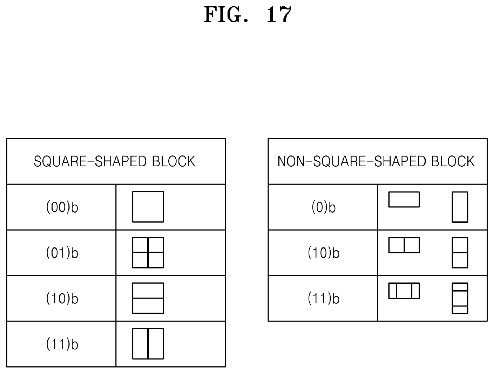

FIG. 17 illustrates various shapes of CUs that may be determined based on split shape mode information expressed in binary code, according to an embodiment.

According to an embodiment, the image decoding apparatus 100 may split a CU into various shapes by using block shape information and split shape mode information obtained through the bitstream obtaining unit 110. The shapes of the splittable CUs may correspond to various shapes including the shapes described with reference to the above-described embodiments.

Referring to FIG. 17, the image decoding apparatus 100 may split a square-shaped CU in at least one of the horizontal direction and the vertical direction and may split a non-square-shaped CU in the horizontal direction or the vertical direction, based on the split shape mode information.

According to an embodiment, when the image decoding apparatus 100 may split a square-shaped CU into four square-shaped CUs by splitting the square-shaped CU in the horizontal direction and the vertical direction, there may be four types of split shapes that may be indicated by the split shape mode information for the square-shaped CU. According to an embodiment, the split shape mode information may be expressed as two-digit binary code, and the binary code may be assigned to each split shape. For example, when the CU is not split, the split shape mode information may be expressed as (00)b. When the CU is split in the horizontal direction and the vertical direction, the split shape mode information may be expressed as (01)b. When the CU is split in the horizontal direction, the split shape mode information may be expressed as (10)b. When the CU is split in the vertical direction, the split shape mode information may be expressed as (11)b.

According to an embodiment, when the image decoding apparatus 100 splits a non-square-shaped CU in the horizontal direction or the vertical direction, the type of the split shape that may be indicated by the split shape mode information may be determined according to the number of split CUs. Referring to FIG. 17, the image decoding apparatus 100 may split a non-square-shaped CU into up to three CUs, according to an embodiment. The image decoding apparatus 100 may split a CU into two CUs, and in this case, the split shape mode information may be expressed as (10)b. The image decoding apparatus 100 may split a CU into three CUs, and in this case, the split shape mode information may be expressed as (11)b. The image decoding apparatus 100 may determine not to split a CU, and in this case, the split shape mode information may be expressed as (0)b. That is, the image decoding apparatus 100 may use variable length coding (VLC) rather than fixed length coding (FLC) so as to use binary code indicating split shape mode information.

According to an embodiment, referring to FIG. 17, the binary code of the split shape mode information indicating that the CU is not split may be expressed as (0)b. When the binary code of the split shape mode information indicating that the CU is not split is set to (00)b, all binary codes of the 2-bit split shape mode information have to be used even though there is no split shape mode information set to (01)b. However, as illustrated in FIG. 17, when three split shapes are used for a non-square-shaped CU, the image decoding apparatus 100 may determine not to split the CU even though 1-bit binary code (0)b is used as the split shape mode information, and thus, the bitstream may be efficiently used. However, the split shape of the non-square-shaped CU indicated by the split shape mode information should not be interpreted as being limited to only three shapes illustrated in FIG. 17, but should be interpreted as various shapes including the embodiments described above.

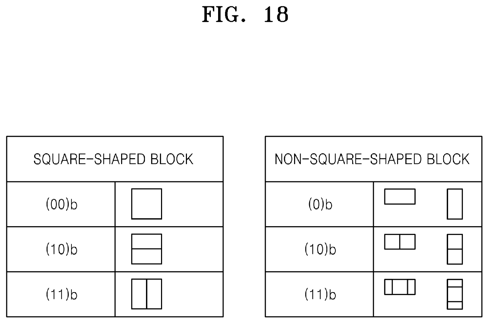

FIG. 18 illustrates other shapes of CUs that may be determined based on split shape mode information expressed in binary code, according to an embodiment.

Referring to FIG. 18, the image decoding apparatus 100 may split a square-shaped CU in the horizontal direction or the vertical direction and may split a non-square-shaped CU in the horizontal direction or the vertical direction, based on the split shape mode information. That is, the split shape mode information may indicate that the square-shaped CU is split in one direction. In this case, the binary code of the split shape mode information indicating that the square-shaped CU is not split may be expressed as (0)b. When the binary code of the split shape mode information indicating that the CU is not split is set to (00)b, all binary codes of the 2-bit split shape mode information have to be used even though there is no split shape mode information set to (01)b. However, as illustrated in FIG. 18, when three split shapes are used for a square-shaped CU, the image decoding apparatus 100 may determine not to split the CU even though 1-bit binary code (0)b is used as the split shape mode information, and thus, the bitstream may be efficiently used. However, the split shape of the square-shaped CU indicated by the split shape mode information should not be interpreted as being limited to only three shapes illustrated in FIG. 18, but should be interpreted as various shapes including the embodiments described above.

In an embodiment, the block shape information or the split shape mode information may be expressed by using binary code, and such information may be directly generated as a bitstream. In addition, the block shape information or the split shape mode information that may be expressed as binary code may not be directly generated as the bitstream, but may be used as binary code input in context adaptive binary arithmetic coding (CABAC).

According to an embodiment, a process in which the image decoding apparatus 100 obtains syntax for the block shape information or the split shape mode information through CABAC is described. A bitstream including binary code for the syntax may be obtained through the bitstream obtaining unit 110. The image decoding apparatus 100 may detect a syntax element indicating the block shape information or the split shape mode information by de-binarizing a bin string included in the obtained bitstream. According to an embodiment, the image decoding apparatus 100 may obtain a set of binary bin strings corresponding to a syntax element to be decoded, and may decode each bin by using probability information, and the image decoding apparatus 100 may repeat the above process until a bin string including the decoded bins becomes equal to one of the previously obtained bin strings. The image decoding apparatus 100 may determine the syntax element by de-binarizing the bin string.

According to an embodiment, the image decoding apparatus 100 may determine the syntax for the bin string by performing a decoding process of adaptive binary arithmetic coding, and the image decoding apparatus 100 may update a probability model for bins obtained through the bitstream obtaining unit 110. Referring to FIG. 17, the bitstream obtaining unit 110 of the image decoding apparatus 100 may obtain the bitstream representing the binary code indicating the split mode information, according to an embodiment. The image decoding apparatus 100 may determine the syntax for the split shape mode information by using the obtained 1-bit or 2-bit binary code. The image decoding apparatus 100 may update the probability for each bit of the 2-bit binary code so as to determine the syntax for the split shape mode information. That is, the image decoding apparatus 100 may update the probability of having a value of 0 or 1 when decoding a next bin, according to whether the value of the first bin in the 2-bit binary code is 0 or 1.

According to an embodiment, in the process of determining the syntax, the image decoding apparatus 100 may update the probability for the bins used in the process of decoding the bins of the bin string for the syntax, and the image decoding apparatus 100 may determine that certain bits in the bin string have the same probability without updating the probability.

Referring to FIG. 17, in the process of determining the syntax by using the bin string indicating the split shape mode information for the non-square-shaped CU, the image decoding apparatus 100 may determine the syntax for the split shape mode information by using one bin having a value of 0 when the non-square-shaped CU is not split. That is, in a case where the block shape information indicates that the current CU is a non-square shape, the first bin of the bin string for the split shape mode information may be 0 when the non-square-shaped CU is not split, and 1 when the non-square-shaped CU is split into two or three CUs. Accordingly, the probability that the first bin of the bin string of the split shape mode information for the non-square-shaped CU is 0 may be 1/3, and the probability that the first bin of the bin string of the split shape mode information for the non-square-shaped CU is 1 may be 2/3. As described above, because the split shape mode information indicating that the non-square-shaped CU is not split may be expressed only as a 1-bit bin string having a value of 0, the image decoding apparatus 100 may determine the syntax for the split shape mode information by determining whether the second bin is 0 or 1 only when the first bin of the split shape mode information is 1. According to an embodiment, the image decoding apparatus 100 may decode the bins by considering that the probability that the second bin is 0 or 1 when the first bin for the split shape mode information is 1 is the same probability.

According to an embodiment, the image decoding apparatus 100 may use various probabilities for each bin in the process of determining the bin of the bin string for the split shape mode information. According to an embodiment, the image decoding apparatus 100 may determine the probability of the bin for the split shape mode information differently according to the direction of the non-square-shaped block. According to an embodiment, the image decoding apparatus 100 may determine the probability of the bin for the split shape mode information differently according to the width or the length of the long side of the current CU. According to an embodiment, the image decoding apparatus 100 may determine the probability of the bin for the split shape mode information differently according to at least one of the shape and the length of the long side of the current CU.

According to an embodiment, the image decoding apparatus 100 may determine that the probability of the bin for the split shape mode information is the same for CUs of a certain size or larger. For example, for CUs with a size of 64 samples or more based on the length of the long side of the CU, the probability of the bin for the split shape mode information may be determined to be the same.

According to an embodiment, the image decoding apparatus 100 may determine an initial probability for bins constituting the bin string of the split shape mode information based on a slice type (e.g., an I slice, a P slice, or a B slice).

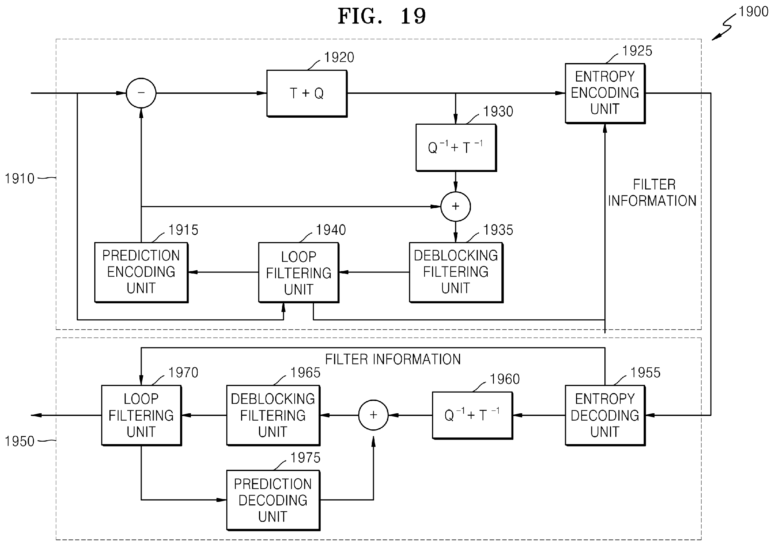

FIG. 19 is a block diagram of an image encoding and decoding system according to an embodiment.

An encoding stage 1910 of an image encoding and decoding system 1900 transmits an encoded bitstream of an image, and a decoding stage 1950 receives and decodes the bitstream to output a reconstructed image. Here, the encoding stage 1910 may have a configuration similar to a configuration of the image encoding apparatus 200 described below, and the decoding stage 1950 may have a configuration similar to a configuration of the image decoding apparatus 100.

In the encoding stage 1910, a prediction encoding unit 1915 outputs prediction data through inter prediction and intra prediction, and a transformation and quantization unit 1920 outputs quantized transformation coefficients of residual data between the prediction data and a current input image. An entropy encoding unit 1925 outputs a bitstream by encoding and converting the quantized transformation coefficients. The quantized transformation coefficients are reconstructed to spatial domain data through an inverse quantization and inverse transformation unit 1930, and the reconstructed spatial domain data is output as a reconstructed image through a deblocking filtering unit 1935 and a loop filtering unit 1940. The reconstructed image may be used as a reference image for a next input image through the prediction encoding unit 1915.

Encoded image data in the bitstream received by the decoding stage 1950 is reconstructed to spatial domain residual data through an entropy decoding unit 1955 and an inverse quantization and inverse transformation unit 1960. Prediction data and residual data output from a prediction decoding unit 1975 may be combined to form spatial domain image data, and a deblocking filtering unit 1965 and a loop filtering unit 1970 may output a reconstructed image for a current original image by performing filtering on the spatial domain image data. The reconstructed image may be used as a reference image for a next original image by the prediction decoding unit 1975.

The loop filtering unit 1940 of the encoding stage 1910 performs loop filtering by using filter information input according to a user input or system settings. The filter information used by the loop filtering unit 1940 is output to the entropy encoding unit 1925 and transmitted to the decoding stage 1950 together with the encoded image data. The loop filtering unit 1970 of the decoding stage 1950 may perform loop filtering based on the filter information input from the decoding stage 1950.

The various embodiments described above describe operations related to the image decoding method performed by the image decoding apparatus 100. Hereinafter, the operation of the image encoding apparatus 200 that performs the image encoding method corresponding to the reverse process of the image decoding method is described with reference to various embodiments.

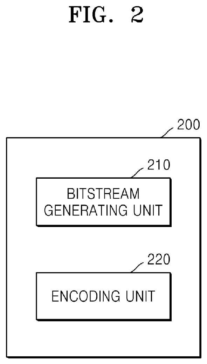

FIG. 2 illustrates a block diagram of the image encoding apparatus 200 capable of encoding an image based on at least one of block shape information and split shape mode information, according to an embodiment.

The image encoding apparatus 200 may include an encoding unit 220 and a bitstream generating unit 210. The encoding unit 220 may receive an input image and encode the input image. The encoding unit 220 may obtain at least one syntax element by encoding the input image. The syntax element may include at least one of skip flag, prediction mode, motion vector difference, motion vector prediction method (or index), transform quantized coefficient, coded block pattern, coded block flag, intra prediction mode, direct flag, merge flag, delta quantization parameter (QP), reference index, prediction direction, and transform index. The encoding unit 220 may determine a context model based on block shape information including at least one of a shape, a direction, a width-to-height ratio, or a size of a CU.

The bitstream generating unit 210 may generate the bitstream based on the encoded input image. For example, the bitstream generating unit 210 may generate the bitstream by performing entropy encoding on the syntax element based on the context model. In addition, the image encoding apparatus 200 may transmit the bitstream to the image decoding apparatus 100.

According to an embodiment, the encoding unit 220 of the image encoding apparatus 200 may determine the shape of the CU. For example, the CU may have a square shape or a non-square shape, and information indicating the shape may be included in the block shape information.

According to an embodiment, the encoding unit 220 may determine the shape into which the CU is split. The encoding unit 220 may determine the shape of at least one CU included in the CU, and the bitstream generating unit 210 may generate the bitstream including the split shape mode information including information about the shape of the CU.

According to an embodiment, the encoding unit 220 may determine whether or not the CU is split. When the encoding unit 220 determines that the CU is not split or only one CU is included in the CU, the bitstream generating unit 210 may generate a bitstream that includes split mode information indicating that the CU is not split. In addition, the encoding unit 220 may split the CU into a plurality of CUs included in the CU, and the bitstream generating unit 210 may generate a bitstream that includes split shape mode information indicating "split into the plurality of CUs."

According to an embodiment, information indicating how many CUs the CU is to be split into or in which direction the CU is to be split may be included in the split shape mode information. For example, the split shape mode information may indicate "split in at least one of the vertical direction and the horizontal direction," or may indicate "not split."

The image encoding apparatus 200 determines information about the split shape mode based on the split shape mode of the CU. The image encoding apparatus 200 determines a context model based on at least one of a shape, a direction, a width-to-height ratio, or a size of a CU. The image encoding apparatus 200 generates, as the bitstream, information about the split shape mode for splitting the CU based on the context model.

To determine the context model, the image encoding apparatus 200 may obtain an array for matching at least one of the shape, the direction, the width-to-height ratio, or the size of the CU with an index for the context model. The image encoding apparatus 200 may obtain the index for the context model based on at least one of the shape, the direction, the width-to-height ratio, or the size of the CU in the array. The image encoding apparatus 200 may determine the context model based on the index for the context model.

To determine the context model, the image encoding apparatus 200 may determine the context model further based on block shape information including at least one of a shape, a direction, a width-to-height ratio, or a size of a neighboring CU adjacent to the CU. In addition, the neighboring CU may include at least one of CUs positioned on a lower left side, a left side, an upper left side, an upper right side, a right side, or a lower right side of the CU.

In addition, to determine the context model, the image encoding apparatus 200 may compare the length of the width of the upper neighboring CU with the length of the width of the CU. In addition, the image encoding apparatus 200 may compare the length of the height of the left and right neighboring CUs with the length of the height of the CU. In addition, the image encoding apparatus 200 may determine the context model based on the comparison results.

Because the operation of the image encoding apparatus 200 includes similar contents to the operation of the image decoding apparatus 100 described with reference to FIGS. 3 to 19, a detailed description thereof is omitted.

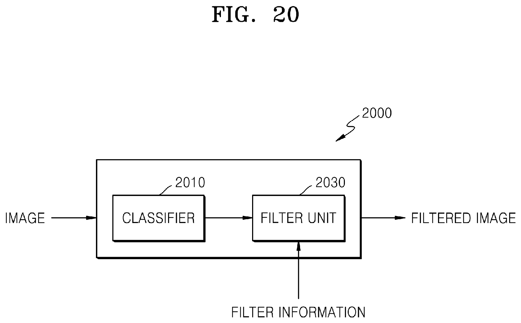

FIG. 20 is a block diagram illustrating a configuration of a filtering device 2000 according to an embodiment.

Referring to FIG. 20, the filtering device 2000 may include a classifier 2010 and a filter unit 2030.

The classifier 2010 and the filter unit 2030 may be implemented as at least one processor. The at least one processor may include processing circuitry.

The classifier 2010 and the filter unit 2030 may operate according to at least one instruction stored in at least one memory.

The filtering device 2000 may include at least one memory that stores input/output data of the classifier 2010 and the filter unit 2030. The filtering device 2000 may include a memory control unit that controls data input and output of the at least one memory.

In an embodiment, the filtering device 2000 may correspond to the loop filtering units 1940 and 1970 illustrated in FIG. 19. In an embodiment, the filtering device 2000 may be included in each of the image decoding apparatus 100 and the image encoding apparatus 200.

In an embodiment, the filtering device 2000 may generate a filtered image from an input image. The filtering device 2000 may classify samples or blocks included in an image according to characteristics thereof and may filter the samples included in the image by using a filter suitable for the classification result.

For example, the classifier 2010 may determine which one of a plurality of classes each of the blocks or the samples included in the image belongs to. In an embodiment, the classifier 2010 may determine a class corresponding to the block or the sample among the plurality of classes, based on a feature value of the block or the sample within the image.

The filter unit 2030 may determine filter coefficients to be used for filtering the samples within the block by taking into account at least one of filter information or the classification result by the classifier 2010. The filter unit 2030 may generate a filtered sample by applying adaptively determined filter coefficients to any one sample and neighboring samples thereof.

In an embodiment, when the classifier 2010 performs the classification process in units of blocks, the same filter may be applied to samples included in the same block. In an embodiment, when the classifier 2010 performs the classification process in units of samples, a filter independently determined for each sample may be applied to each of the samples within the image.

In an embodiment, the image classified by the classifier 2010 may include at least one of a reconstructed image, a deblocking-filtered reconstructed image, a reconstructed image to which a fixed filter has been applied, a predicted image, a residual image, a predicted image to which a fixed filter has been applied, or a residual image to which a fixed filter has been applied.

Here, the predicted image may be an image generated by performing intra prediction or inter prediction on blocks, and the residual image may be an image corresponding to the difference between the original image and the predicted image. In addition, the reconstructed image may be an image generated as a result of combining the predicted image with the residual image.

A deblocking filter may be applied to the reconstructed image so as to remove artifacts between blocks. A fixed filter may refer to a filter in which filter coefficients are predefined between the image encoding apparatus 200 and the image decoding apparatus 100.

In an embodiment, the image filtered by the filter unit 2030 may include at least one of a reconstructed image, a deblocking-filtered reconstructed image, a reconstructed image to which a fixed filter has been applied, a predicted image, a residual image, a predicted image to which a fixed filter has been applied, or a residual image to which a fixed filter has been applied.

In an embodiment, when a plurality of images are classified by the classifier 2010, a final classification result may be obtained by combining classification results of the plurality of images. For example, it may be determined which class each of blocks included in different images belongs to. A class indicated by an average of values representing the classes to which each of the plurality of blocks belongs may be obtained as the final classification result.

In an embodiment, when feature values (e.g., direction feature values or sample feature values to be described below) are calculated from a plurality of images so as to classify the plurality of images, the final classification result may be obtained based on a value obtained by combining the calculated feature values.

In an embodiment, when a plurality of images are filtered by the filter unit 2030, a final filtered image may be obtained by combining (e.g., weighted-combining) the filtered images.

In an embodiment, a type of an image classified by the classifier 2010 may be different from a type of an image filtered by the filter unit 2030. For example, the deblocking-filtered reconstructed image may be filtered based on the classification result for the residual image. As another example, at least one of the reconstructed image, the deblocking-filtered reconstructed image, the reconstructed image to which the fixed filter has been applied, the residual image, or the residual image to which the fixed filter has been applied may be filtered based on the classification result for the deblocking-filtered reconstructed image or the residual image.

In an embodiment, a type of an image classified by the classifier 2010 may be identical to a type of an image filtered by the filter unit 2030.

Hereinafter, a current image is described as being input to the classifier 2010 and the filter unit 2030, a type of an image input to the classifier 2010 may be identical to or different from a type of an image input to the filter unit 2030.

When the classification result of the current image is obtained by the classifier 2010, the filter unit 2030 may determine a filter suitable for filtering samples within the current image according to the classification result and/or filter information. The filter unit 2030 may filter samples within the current image by using a determined filter.

In an embodiment, when the filtering device 200 is included in the image decoding apparatus, filter information may be obtained from a bitstream. In an embodiment, when the filtering device 200 is included in the image encoding apparatus, the filtering device 200 may generate filter information with reference to an image filtering result and may include the generated filter information in the bitstream.

In an embodiment, the bitstream may correspond to an image encoding result. In an embodiment, the bitstream may be generated by the image encoding apparatus 200 and transmitted to the image decoding apparatus 100.

In an embodiment, the bitstream may be stored in a storage medium, such as an optical media or a hard disk.

In an embodiment, the filter information may include at least one of information indicating whether adaptive filtering is applied to a current image or a block (e.g., a slice, a CTU, etc.) within the current image, information indicating which adaptation parameter set (APS) among a plurality of APSs included in a bitstream is used for the current image or the block in the current image, or information indicating which filter set among a plurality of filter sets is used for the current image or the block within the current image.

In an embodiment, the APS may include information about filter coefficients, and filter coefficients identified from the classification result by the classifier 2010 may be applied to samples within the current image.

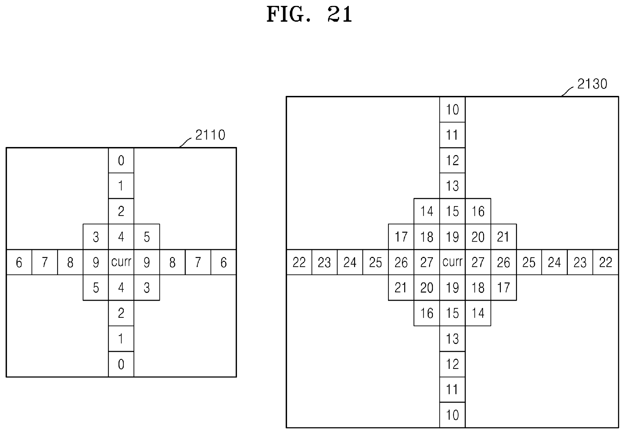

FIG. 21 is a diagram illustrating a filter according to an embodiment.

In an embodiment, a first filter 2110 and a second filter 2130 may be used for filtering an image. "curr" included in each of the first filter 2110 and the second filter 2130 may represent a samples to be filtered.

In an embodiment, the first filter 2110 may be applied to a deblocking-filtered reconstructed image, and the second filter 2130 may be applied to a reconstructed image to which a fixed filter has been applied.

The filter unit 2030 may determine filter coefficients included in the first filter 2110 and the second filter 2130, based on the filter information and/or the classification result of the classifier 2010. For example, zeroth to ninth filter coefficients of the first filter 2110 and tenth to twenty-seventh filter coefficients of the second filter 2130 may be determined based on a class to which a block or a sample within a current image belongs and a filter set used for filtering the current image.

FIG. 21 discloses only two filters 2110 and 2130; however, in an embodiment, one or more filters may be used for filtering an image.

Although the filtering device 2000 illustrated in FIG. 20 includes one classifier 2010, the filtering device 2000 may include a plurality of classifiers 2010.

For example, when the filtering device 2000 includes a first classifier, a second classifier, and a third classifier, the first classifier, the second classifier, and the third classifier may classify blocks of a current image in different methods.

In an embodiment, when the filtering device 2000 includes one classifier, the classifier may classify blocks of a current image, based on a direction feature value to be described below.

In an embodiment, when the filtering device 2000 includes a first classifier and a second classifier, the first classifier may classify blocks of a current image, based on direction feature values to be described below, and the second classifier may classify blocks of a current image, based on sample feature values to be described below.

In an embodiment, when the filtering device 2000 includes a first classifier, a second classifier, and a third classifier, the first classifier may classify blocks of a current image, based on direction feature values of blocks within a deblocking-filtered reconstructed image, the second classifier may classify blocks of the current image based on sample feature values within the deblocking-filtered reconstructed image, and the third classifier may classify blocks of a current image, based on sample feature values within a residual image.

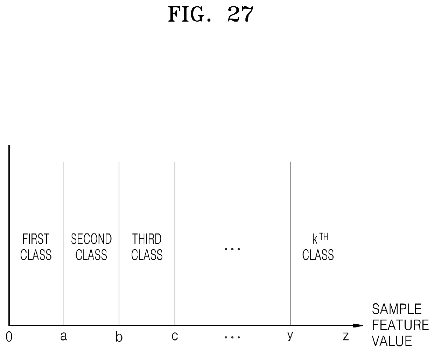

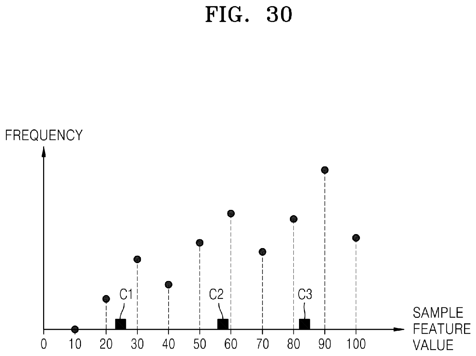

In an embodiment, when the filtering device 2000 includes a first classifier, a second classifier, a third classifier, and a fourth classifier, the first classifier may classify blocks of a current image, based on direction feature values of blocks within a deblocking-filtered reconstructed image, the second and third classifiers may classify blocks of a current image, based on sample feature values within a deblocking-filtered reconstructed image, and the fourth classifier may classify blocks of a current image, based on sample feature values within a residual image. Here, as described with reference to FIG. 27, the second classifier may classify blocks of a current image by dividing an entire range including candidate values into a plurality of sub-ranges having the same size. As described with reference to FIGS. 30 to 33, the third classifier may classify blocks of a current image by adaptively dividing an entire range including candidate values into a plurality of sub-ranges.

In an embodiment, when the filtering device 2000 includes a plurality of classifiers 2010, one of the plurality of classifiers 2010 may be selected, and a classification result of the selected classifier 2010 may be provided to the filter unit 2030. When the filtering device 2000 is included in the image decoding apparatus 100, information indicating one of the plurality of classifiers 2010 may be obtained from a bitstream.

In an embodiment, when the filtering device 2000 includes a plurality of classifiers 2010, a final classification result may be obtained by combining classification results of the plurality of classifiers 2010. For example, when the current block is classified by the plurality of classifiers 2010, values indicating classes to which the current block belongs may be obtained, and a class corresponding to an average of the obtained values may be determined as a final class of the current block.

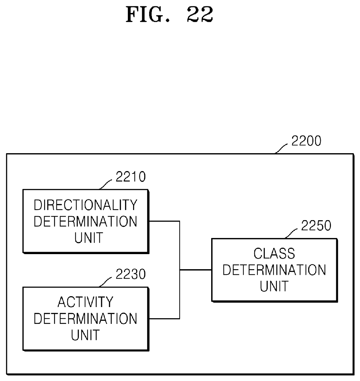

Hereinafter, the classifier 2010 that classifies the current block based on the direction feature values is described with reference to FIGS. 22 to 26.

The current block may be a slice, a tile, a CTU, a CU, a prediction unit, or a transform unit, which is split from a current image. In an embodiment, the size of the current block may be greater than or equal to 1×1. For example, the size of the current block may be 2x2 or 4x4.

FIG. 22 is a block diagram illustrating a configuration of a classifier 2200 according to an embodiment.

Referring to FIG. 22, the classifier 2200 may include a directionality determination unit 2210, an activity determination unit 2230, and a class determination unit 2250.

The directionality determination unit 2210 may determine a directionality value of a current block to be classified, and the activity determination unit 2230 may determine an activity value of the current block.

The class determination unit 2250 may determine which one of a plurality of classes the current block belongs to by using at least one of the directionality value or the activity value. For example, the class determination unit 2250 may determine that the current block belongs to a class indicated by a value obtained by combining the directionality value with the activity value.

As described above, when the class corresponding to the current block is determined, the filter unit 2030 may obtain filter coefficients for filtering samples within the current block, based on the determined class.

In an embodiment, the directionality determination unit 2210 may calculate a direction feature value of the current block. The directionality value and the activity value may be determined based on the direction feature value.

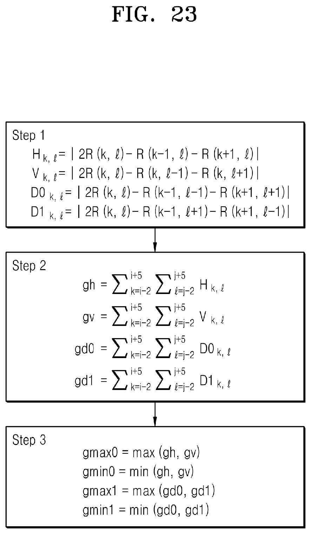

FIG. 23 is a diagram for describing a method of calculating direction feature values of a current block, according to an embodiment.

In an embodiment, a direction feature value may include a gradient value or a Laplace value representing an amount of change of sample values.

In an embodiment, a gradient value of a first sample may correspond to a difference between a sample value of the first sample and a sample value of a second sample located after the first sample.

In an embodiment, a Laplace value of the first sample may correspond to a value obtained by subtracting a second difference between the sample value of the first sample and the sample value of the second sample located after the first sample from a first difference between a sample value of a third sample located before the first sample and the sample value of the first sample. The Laplace value of the first sample may correspond to a difference between a gradient value of the third sample and the gradient value of the first sample.

In an embodiment, the expression that one sample is located after another sample may mean, for example, that the one sample is located to the right of or below the other sample based on a raster scan order.

Referring to FIG. 23, in Step 1, at least one of a first direction feature value, a second direction feature value, a third direction feature value, or a fourth direction feature value may be obtained for each of samples within the current block and samples adjacent to the current block.

In an embodiment, the first direction feature value may be a feature value of a horizontal direction, and the second direction feature value may be a feature value of a vertical direction. The third direction feature value is a feature value of a first diagonal direction, and the fourth direction feature value may be a feature value of a second diagonal direction.

In an embodiment, the first diagonal direction may be a direction connecting an upper right sample and a lower left sample to each other with respect to a given sample, and the second diagonal direction may be a direction connecting an upper left sample and a lower right sample to each other with respect to the given sample.

Referring to FIG. 23, the first direction feature value may be a Laplace value H_{k,l} of the horizontal direction, and the second direction feature value may be a Laplace value Vₖ,ₗ of the vertical direction. In addition, the feature value of the first diagonal direction may be a Laplace value D0ₖ,ₗ of the first diagonal direction, and the feature value of the second diagonal direction may be a Laplace value D1ₖ,ₗ of the second diagonal direction. k and l may represent the positions of the samples. In FIG. 23, R(k, l) may represent a sample value of a sample located at position (k, l).

In Step 2, the direction feature value of the current block may be calculated by combining direction feature values of the respective samples of the current block with direction feature values of the respective samples adjacent to the current block.

In an embodiment, a horizontal direction feature value gh of the current block may be calculated by summing horizontal direction feature values H_{k,l} of the respective samples within the current block and horizontal direction feature values Hₖ,ₗ of the respective samples adjacent to the current block.

In addition, in an embodiment, a vertical direction feature value gv of the current block may be calculated by summing vertical direction feature values V_{k,l} of the respective samples within the current block and vertical direction feature values Vₖ,ₗ of the respective samples adjacent to the current block.

In addition, in an embodiment, a first diagonal direction feature value gd0 of the current block may be calculated by summing first diagonal direction feature values D0_{k,l} of the respective samples within the current block and first diagonal direction feature values D0ₖ,ₗ of the respective samples adjacent to the current block.

In addition, in an embodiment, a second diagonal direction feature value gd1 of the current block may be calculated by summing second diagonal direction feature values D1_{k,l} of the respective samples within the current block and second diagonal direction feature values D1ₖ,ₗ of the respective samples adjacent to the current block.

In Step 2 of FIG. 23, i and j may represent the positions of the upper left samples within the current block. In addition, in Step 2, the expression that k has a value from i-2 to i+5 and l has a value from j-2 to j+5 may mean that, when the size of the current block is 4x4, the direction feature value of the current block is calculated by summing the direction feature values of eight samples (four samples within the current block and four samples adjacent to an outside boundary of the current block).

In an embodiment, the number of samples used to obtain the direction feature values of the blocks may be variously determined, and accordingly, the range of k and the range of l in Step 2 may be variously modified.

In Step 3, a larger one of the horizontal direction feature value gh and the vertical direction feature value gv of the current block may be determined as a first maximum feature value gmax0, and a smaller one of the horizontal direction feature value gh and the vertical direction feature value gv of the current block may be determined as a first minimum feature value gmin0. In addition, a larger one of the first diagonal direction feature value gd0 and the second diagonal direction feature value gd1 of the current block may be determined as a second maximum feature value gmax1, and a smaller one of the first diagonal direction feature value gd0 and the second diagonal direction feature value gd1 of the current block may be determined as a second minimum feature value gmin1.

In an embodiment, the directionality determination unit 2210 may determine the directionality value of the current block by using at least one of the first maximum feature value gmax0, the first minimum feature value gmin0, the second maximum feature value gmax1, or the second minimum feature value gmin1.

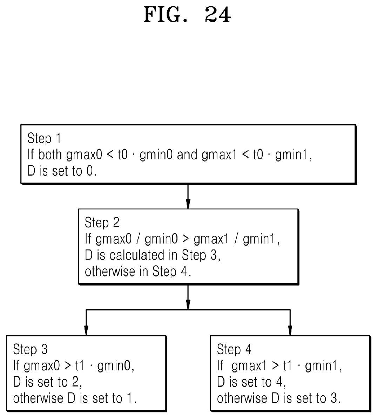

FIG. 24 is a diagram for describing a method of determining a directionality value of a current block, according to an embodiment.

Referring to FIG. 24, in Step 1, a directionality value D may be determined to be 0 when the first maximum feature value gmax0 is less than a value obtained by multiplying a predefined first threshold value t0 by the first minimum feature value gmin0, and the second maximum feature value gmax1 is less than a value obtained by multiplying the first threshold value t0 by the second minimum feature value gmin1.

In other words, in Step 1, the directionality value D may be determined to be 0 when a first ratio between the first maximum feature value gmax0 and the first minimum feature value gmin0 (e.g., a value obtained by dividing the first maximum feature value gmax0 by the first minimum feature value gmin0) is less than the first threshold value t0, and a second ratio between the second maximum feature value gmax1 and the second minimum feature value gmin1 (e.g., a value obtained by dividing the second maximum feature value gmax1 by the second minimum feature value gmin1) is less than the first threshold value t0.

In an embodiment, the expression that the directionality value D has a value of 0 may mean that no directionality exists in the sample values within the current block. In other words, no edge may exist within the current block where the directionality value D is 0.

In an embodiment, the first threshold value t0 used for comparison with the first ratio may be identical to or different from the first threshold value t0 used for comparison with the second ratio.

In an embodiment, at least one of the first threshold value t0 used for comparison with the first ratio or the first threshold value t0 used for comparison with the second ratio may be adaptively determined based on a type of a slice including the current block, QPs for blocks included in the slice, a size of a CTU, and the like. The type of the slice may be, for example, any one of a bi-predictive slice, a predictive slice, and an intra slice.

In Step 1, when the first ratio is greater than or equal to the first threshold value t0 or when the second ratio is greater than or equal to the first threshold value t0, it may be determined that an edge exists within the current block, and Step 2 may be performed.

In Step 2, the directionality of the edge existing within the current block may be identified. In an embodiment, it may be determined whether the first ratio between the first maximum feature value gmax0 and the first minimum feature value gmin0 is greater than the second ratio between the second maximum feature value gmax1 and the second minimum feature value gmin1.

When the first ratio is greater than the second ratio, it may be determined that a horizontal edge or a vertical edge exists within the current block, and Step 3 may be performed. When the first ratio is less than or equal to the second ratio, it may be determined that a first diagonal edge or a second diagonal edge exists within the current block, and Step 4 may be performed.

In Step 3, when the first maximum feature value gmax0 is greater than a value obtained by multiplying the first minimum feature value gmin0 by the second threshold value t1, the directionality value D may be determined to be 2, and when the first maximum feature value gmax0 is less than or equal to the value obtained by multiplying the first minimum feature value gmin0 by the second threshold value t1, the directionality value D may be determined to be 1.

Step 3 may be understood as a process of determining whether the first ratio between the first maximum feature value gmax0 and the first minimum feature value gmin0 is greater than the second threshold value t1.

In an embodiment, the expression that the directionality value D is 1 may mean that a strength of a horizontal edge or a vertical edge within the current block is weak. In addition, in an embodiment, the expression that the directionality value D is 2 may mean that a strength of a horizontal edge or a vertical edge within the current block is strong.

In Step 4, when the second maximum feature value gmax1 is greater than a value obtained by multiplying the second minimum feature value gmin1 by the second threshold value t1, the directionality value D may be determined to be 4, and when the second maximum feature value gmax1 is less than or equal to the value obtained by multiplying the second minimum feature value gmin1 by the second threshold value t1, the directionality value D may be determined to be 3.

Step 4 may be understood as a process of determining whether the second ratio between the second maximum feature value gmax1 and the second minimum feature value gmin1 is greater than the second threshold value t1.

In an embodiment, the expression that the directionality value D is 3 may mean that a strength of a first diagonal edge or a second diagonal edge within the current block is weak. In addition, in an embodiment, the expression that the directionality value D is 4 may mean that a strength of a first diagonal edge or a second diagonal edge within the current block is strong.

In an embodiment, the second threshold value t1 used in Step 3 may be identical to or different from the second threshold value t1 used in Step 4.

In an embodiment, at least one of the second threshold value t1 used in Step3 or the second threshold value t1 used in Step4 may be adaptively determined based on a type of a slice including the current block, QPs for blocks included in the slice, a size of a CTU, and the like.

According to the embodiment described above with reference to FIG. 24, the directionality value D of the current block may be determined as one of values from 0 to 4. In an embodiment, the magnitudes and/or the number of values allowable for the directionality value D may be variously changed.

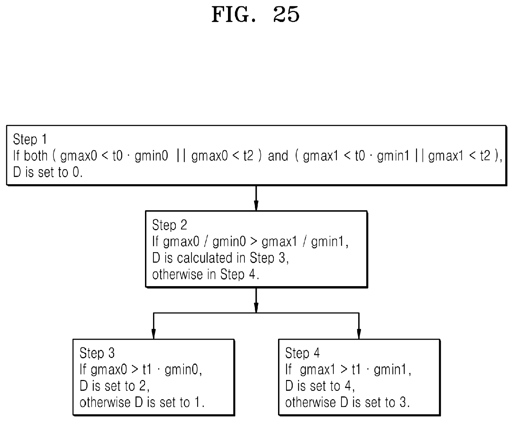

FIG. 25 is a diagram for describing a method of determining a directionality value of a current block, according to an embodiment.

According to Step 1 illustrated in FIG. 24, whether an edge exists within the current block is determined by the first ratio between the first maximum feature value gmax0 and the first minimum feature value gmin0 and the second ratio between the second maximum feature value gmax1 and the second minimum feature value gmin1.

For example, according to Step 1 illustrated in FIG. 24, even when the first maximum feature value gmax0 or the second maximum feature value gmax1 is small, the first ratio or the second ratio may have a great value when the first minimum feature value gmin0 or the second minimum feature value gmin1 has a very small value close to 0. Accordingly, even when no actual edge exists, it may be determined that an edge exists within the current block.

As another example, even when the first maximum feature value gmax0 or the second maximum feature value gmax1 has a great value, the first ratio or the second ratio may have a small value when the first minimum feature value gmin0 or the second minimum feature value gmin1 also has a great value. Accordingly, even when an actual edge exists, it may be determined that no edge exists within the current block.

In Step 1 illustrated in FIG. 25, by taking into account the magnitudes of the first maximum feature value gmax0 and the second maximum feature value gmax1 themselves, it is possible to prevent an erroneous determination as to whether an edge exists, as in the above example.

In an embodiment, in Step 1, the directionality value D may be determined to be 0 when the first maximum feature value gmax0 is less than or equal to a value obtained by multiplying the predefined first threshold value t0 by the first minimum feature value gmin0, or when the first maximum feature value gmax0 is less than the third threshold value t2 and the second maximum feature value gmax1 is less than a value obtained by multiplying the first threshold value t0 by the second minimum feature value gmin1, or when the second maximum feature value gmax1 is less than the third threshold value t2.

In other words, the directionality value D may be determined to be 0 when the first ratio between the first maximum feature value gmax0 and the first minimum feature value gmin0 is less than the first threshold value t0, or when the first maximum feature value gmax0 is less than the third threshold value t2 and the second ratio between the second maximum feature value gmax1 and the second minimum feature value gmin1 is less than the first threshold value t0, or when the second maximum feature value gmax1 is less than the third threshold value t2.

According to Step 1 illustrated in FIG. 25, the magnitudes of the first maximum feature value gmax0 and the second maximum feature value gmax1 themselves may be used to determine whether an edge exists. Therefore, when the first maximum feature value gmax0 or the second maximum feature value gmax1 is small, it is possible to prevent an erroneous determination that an edge exists within the current block.

In an embodiment, the first threshold value t0 used for comparison with the first ratio may be identical to or different from the first threshold value t0 used for comparison with the second ratio.

In an embodiment, at least one of the first threshold value t0 used for comparison with the first ratio or the first threshold value t0 used for comparison with the second ratio may be adaptively determined based on a type of a slice including the current block, QPs for blocks included in the slice, a size of a CTU, and the like.

In an embodiment, the third threshold value t2 used for comparison with the first maximum feature value gmax0 may be identical to or different from the third threshold value t2 used for comparison with the second maximum feature value gmax1.

In an embodiment, at least one of the third threshold value t2 used for comparison with the first maximum feature value gmax0 or the third threshold value t2 used for comparison with the second maximum feature value gmax1 may be adaptively determined based on a type of a slice including the current block, QPs for blocks included in the slice, a size of a CTU, and the like.

In an embodiment, for comparison with the third threshold value t2, an average of the first maximum feature value gmax0 and the first minimum feature value gmin0 may be used instead of the first maximum feature value gmax0. In addition, in an embodiment, for comparison with the third threshold value t2, an average of the second maximum feature value gmax1 and the second minimum feature value gmin1 may be used instead of the second maximum feature value gmax1.

In other words, in Step 1, the directionality value D may be determined to be 0 when the first ratio is less than the first threshold value t0, or when the average of the first maximum feature value gmax0 and the first minimum feature value gmin0 is less than the third threshold value t2 and the second ratio is less than the first threshold value t0, or when the average of the second maximum feature value gmax1 and the second minimum feature value gmin1 is less than the third threshold value t2.

Steps 2, 3, and 4 of FIG. 25 are the same as Steps 2, 3, and 4 described with reference to FIG. 24, and thus, a detailed description thereof is omitted herein.

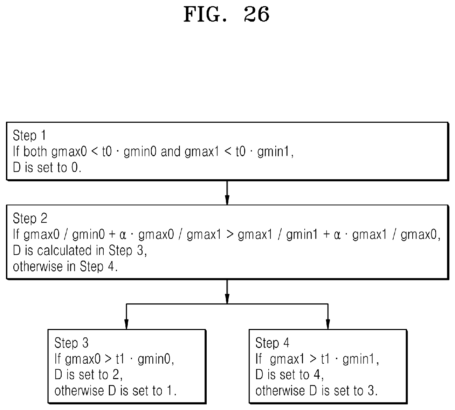

FIG. 26 is a diagram for describing a method of determining a directionality value of a current block, according to an embodiment.

Steps 1, 3, and 4 of FIG. 26 are the same as Steps 1, 3, and 4 described with reference to FIG. 24, and thus, a detailed description thereof is omitted herein.

According to Step 2 illustrated in FIG. 24, a direction of an edge existing within the current block is determined according to the first ratio between the first maximum feature value gmax0 and the first minimum feature value gmin0 and the second ratio between the second maximum feature value gmax1 and the second minimum feature value gmin1. In this case, even when the first maximum feature value gmax0 is small and the second maximum feature value gmax1 is large, it may be determined that a horizontal edge or a vertical edge exists within the current block when the first minimum feature value gmin0 is sufficiently small. That is, even when a first diagonal edge or a second diagonal edge exists within the current block, it may be erroneously determined that a horizontal edge or a vertical edge exists within the current block.

In contrast, even when the second maximum feature value gmax1 is small and the first maximum feature value gmax0 is large, it may be determined that a first diagonal edge or a second diagonal edge exists within the current block when the second minimum feature value gmin1 is sufficiently small.

In Step 2 illustrated in FIG. 26, a direction of an edge existing within the current block may be determined more accurately by taking into account a ratio between the first maximum feature value gmax0 and the second maximum feature value gmax1.

In an embodiment, in Step 2, when a value obtained by combining the first ratio with a value obtained by dividing the first maximum feature value gmax0 by the second maximum feature value gmax1 is greater than a value obtained by combining the second ratio with a value obtained by dividing the second maximum feature value gmax1 by the first maximum feature value gmax0, it may be determined that a horizontal edge or a vertical edge exists within the current block.

In an embodiment, when a value obtained by combining the first ratio with a value obtained by dividing the first maximum feature value gmax0 by the second maximum feature value gmax1 is less than or equal to a value obtained by combining the second ratio with a value obtained by dividing the second maximum feature value gmax1 by the first maximum feature value gmax0, it may be determined that a first diagonal edge or a second diagonal edge exists within the current block.

α shown in FIG. 26 may be a predefined weight. In an embodiment, a weight α applied to a value obtained by dividing the first maximum feature value gmax0 by the second maximum feature value gmax1 may be identical to or different from a weight α applied to a value obtained by dividing the second maximum feature value gmax1 by the first maximum feature value gmax0.

In an embodiment, instead of the value obtained by dividing the first maximum feature value gmax0 by the second maximum feature value gmax1, a value obtained by dividing an average of the first maximum feature value gmax0 and the first minimum feature value gmin0 by an average of the second maximum feature value gmax1 and the second minimum feature value gmin1 may be used. In addition, instead of the value obtained by dividing the second maximum feature value gmax1 by the first maximum feature value gmax0, a value obtained by dividing an average of the second maximum feature value gmax1 and the second minimum feature value gmin1 by an average of the first maximum feature value gmax0 and the first minimum feature value gmin0 may be used.

In an embodiment, after Step 1 illustrated in FIG. 25 is performed, Steps 2, 3, and 4 illustrated in FIG. 26 may be performed.

In Steps 1, 2, and 3 of FIGS. 24 to 26, it has been determined whether one value is greater than or less than the other value in order to compare the magnitudes of the two values. However, in an embodiment, it may be changed to determine whether one value is greater than or equal to or less than or equal to the other value. For example, in Step 1 of FIG. 26, it is determined whether the first ratio is less than the first threshold value t0 and whether the second ratio is less than the first threshold value t0. However, in an embodiment, it may be determined whether the first ratio is less than or equal to the first threshold value t0 and whether the second ratio is less than or equal to the first threshold value t0.

Referring again to FIG. 22, in an embodiment, the activity determination unit 2230 may determine the activity value of the current block by using at least one of the horizontal feature value gh, the vertical feature value gv, the first diagonal direction feature value gd0, or the second diagonal direction feature value gd1.

In an embodiment, the activity determination unit 2230 may determine the activity value of the current block from the sum of the horizontal direction feature value gh and the vertical direction feature value gv. For example, the activity determination unit 2230 may scale the sum of the horizontal feature value gh and the vertical feature value gv based on a predefined value (e.g., a bit depth), and may map the scaled value to one of predefined candidate values. The mapped candidate value may be determined as the activity value of the current block.

In an embodiment, the activity determination unit 2230 may determine the activity value of the current block from the sum of the first diagonal direction feature value gd0 and the second diagonal direction feature value gd1. For example, the activity determination unit 2230 may scale the sum of the first diagonal feature value gd0 and the second diagonal feature value gd1 based on a predefined value (e.g., a bit depth), and may map the scaled value to one of predefined candidate values. The mapped candidate value may be determined as the activity value of the current block.

When only the horizontal direction feature value gh and the vertical direction feature value gv are used to determine the activity value of the current block, first diagonal direction features and second diagonal direction features within the current block may not be taken into account. In addition, when only the first diagonal direction feature value gd0 and the second diagonal direction feature value gd1 are used to determine the activity value of the current block, horizontal direction features and vertical direction features within the current block may not be taken into account.

In an embodiment, when the direction of the edge within the current block is determined as the horizontal direction or the vertical direction according to Step 2 included in FIGS. 24 to 26, the activity determination unit 2230 may determine the activity value of the current block based on the sum of the horizontal direction feature value gh and the vertical direction feature value gv (or an average of the horizontal direction feature value gh and the vertical direction feature value gv). When the direction of the edge within the current block is determined as the first diagonal direction or the second diagonal direction, the activity determination unit 2230 may determine the activity value of the current block based on the sum of the first diagonal direction feature value gd0 and the second diagonal direction feature value gd1 (or an average of the first diagonal direction feature value gd0 and the second diagonal direction feature value gd1).

In an embodiment, when the direction of the edge within the current block is determined as the horizontal direction or the vertical direction according to Step 2 included in FIGS. 24 to 26, the activity determination unit 2230 may determine the activity value of the current block from the first maximum feature value gmax0 (or a value obtained by multiplying the first maximum feature value gmax0 by the predefined weight). For example, the activity determination unit 2230 may scale the first maximum feature value gmax0 (or a value obtained by multiplying the first maximum feature value gmax0 by the predefined weight) based on a predefined value (e.g., a bit depth), and may map the scaled value to one of predefined candidate values. The mapped candidate value may be determined as the activity value of the current block.

When the direction of the edge within the current block is determined as the first diagonal direction or the second diagonal direction, the activity determination unit 2230 may determine the activity value of the current block from the second maximum feature value gmax1 (or a value obtained by multiplying the second maximum feature value gmax1 by the predefined weight). For example, the activity determination unit 2230 may scale the second maximum feature value gmax1 (or a value obtained by multiplying the second maximum feature value gmax1 by the predefined weight) based on a predefined value (e.g., a bit depth), and may map the scaled value to one of predefined candidate values. The mapped candidate value may be determined as the activity value of the current block.

In an embodiment, the activity value of the current block may be determined as one of values from 0 to 4. In an embodiment, the magnitudes and/or the number of candidate values allowable for the activity value may be variously changed.

In an embodiment, when the directionality value and the activity value of the current block are derived, the class determination unit 2250 may determine which class among a plurality of classes the current block belongs to by using at least one of the directionality value or the activity value. For example, the class determination unit 2250 may determine that the current block belongs to a class indicated by a value obtained by combining the directionality value with the activity value.

In an embodiment, the class determination unit 2250 may derive one of values from 0 to 24 by multiplying the directionality value by 5 and then adding the activity value thereto. The derived value may represent the class to which the current block belongs. In an embodiment, the class determination unit 2250 may derive one of values from 0 to 24 by multiplying the activity value by 5 and then adding the directionality value thereto.

Hereinafter, a method of classifying a current block based on a sample feature value of the current block is described.

FIG. 27 is a diagram for describing a method of classifying a current block based on a sample feature value of the current block, according to an embodiment.

The sample feature value of the current block may be obtained for the classification of the current block.

In an embodiment, the sample feature value may correspond to the sum of sample values within the current block or an average of the sample values within the current block.

When the sample feature value of the current block is calculated, a class of the current block may be determined based on the magnitude of the sample feature value of the current block. In an embodiment, the sample feature value of the current block may be scaled based on a predefined value, and a class indicated by the scaled value may be determined as the class of the current block.

Because the range of the sample values is limited, the sample feature value may also be included in a predefined range. In other words, the sample feature value may correspond to one of a plurality of values within the predefined range.

As illustrated in FIG. 27, when the sample feature value may have one of values from 0 to z, it may be identified which sub-range among a plurality of equally spaced sub-ranges within an entire range including 0 to z the sample feature value of the current block belongs to, and the class of the current block may be determined according to the identified sub-range.

In FIG. 27, the sub-ranges may correspond to a plurality of classes. FIG. 27 illustrates that k classes exist, where k may be a natural number greater than 1 (e.g., 25).

For example, when the sample feature value of the current block falls within a sub-range of 0 to a, the current block may be classified into a first class, and when the sample feature value of the current block falls within a sub-range of a to b, the current block may be classified into a second class.

Here, the expression that the sample feature value of the current block falls within a sub-range may mean that the sample feature value of the current block corresponds to one of values including a minimum value to a maximum value of the corresponding sub-range.

According to an embodiment, when the sample feature value may have one of values included in a predefined entire range, the predefined entire range may be divided into a plurality of equally spaced sub-ranges. However, when the entire range is divided into equally spaced sub-ranges without taking into account image characteristics, blocks to be filtered by the same or similar filters may instead be filtered by completely different filters.

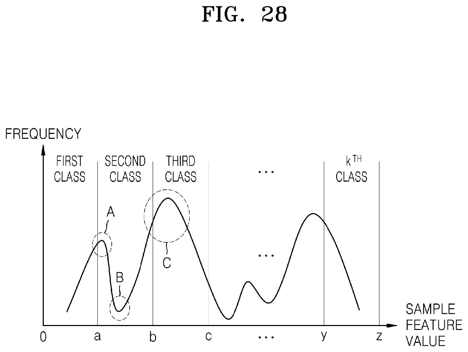

FIG. 28 is a diagram illustrating a histogram of sample feature values, according to an embodiment.

The histogram illustrated in FIG. 28 shows the frequencies of sample feature values included in an image.

In general, the number of blocks located inside a boundary of an object within an image may be greater than the number of blocks located on the boundary of the object. In addition, sample feature values of the blocks located inside the boundary of the object may be similar to each other.

That is, sample feature values with high frequencies on the histogram are highly likely to be derived from the blocks located inside the boundary of the object, and thus, it may be desirable to filter blocks having sample feature values with high frequencies by using the same or similar filters. This is because the corresponding blocks are highly likely to constitute the same object.

Referring to FIG. 28, because the frequencies of sample feature values belonging to a region A are greater than the frequencies of sample feature values belonging to a region B, blocks having the sample feature values belonging to the region A may be located inside the boundary of the object, and blocks having the sample feature values belonging to the region B may be located on the boundary of the object. However, because the blocks having the sample feature values belonging to the region A and the blocks having the sample feature values belonging to the region B are all classified into a second class, a problem may arise in that blocks having different characteristics are filtered by using the same filter.

In addition, because the frequencies of sample feature values belonging to a region C are high, it may be desirable to classify blocks having the sample feature values belonging to the region C into the same class. However, according to FIG. 28, some of the sample feature values belonging to the region C are classified into the second class and others of the sample feature values belonging to the region C are classified into the third class, and thus, consistency of filtering for the same object may not be maintained.

In an embodiment, because each of blocks included in an image are classified by taking into account the tendencies or characteristics of the blocks, the accuracy of classification may be improved.

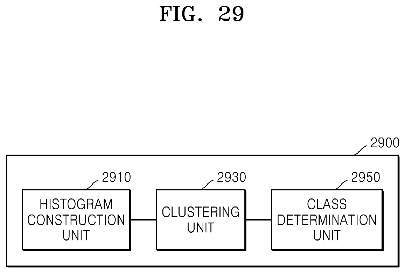

FIG. 29 is a block diagram illustrating a configuration of a classifier 2900 according to an embodiment.

Referring to FIG. 29, the classifier 2900 may include a histogram construction unit 2910, a clustering unit 2930, and a class determination unit 2950.

The histogram construction unit 2910 may generate a histogram based on sample feature values of blocks included in a current image. Here, the process of generating the histogram may be understood as a process of calculating frequencies of the sample feature values of the blocks included in the current image.

Hereinafter, the histogram is described as being generated for the current image; however, the histogram may also be generated for a higher-level block of blocks within the current image. For example, when sample feature values of CUs are calculated, the histogram may be generated for a slice or a CTU including a plurality of CUs.

In an embodiment, the histogram construction unit 2910 may obtain a frequency in which candidate values allowable for a sample feature value are respectively calculated as sample feature values of blocks within the current image.

For example, when the candidate values of 1, 2, and 3 exist, the histogram construction unit 2910 may identify the number of blocks having a sample feature value of 1, the number of blocks having a sample feature value of 2, and the number of blocks having a sample feature value of 3.

The clustering unit 2930 may divide an entire range including the candidate values into a plurality of sub-ranges by taking into account the frequencies of the respective candidate values. The plurality of sub-ranges may correspond to a plurality of classes. In other words, the clustering unit 2930 may group the candidate values according to the plurality of classes.

In an embodiment, the clustering unit 2930 may divide an entire range into a plurality of sub-ranges according to an unsupervised algorithm. The unsupervised algorithm may include, for example, a k-means clustering algorithm.

The class determination unit 2950 may determine which sub-range among a plurality of sub-ranges the sample feature value of the current block belongs to, and may determine, as the class of the current block, a class corresponding to the sub-range to which the sample feature value of the current block belongs.

In an embodiment, the process of determining which one of a plurality of sub-ranges the sample feature value of the current block belongs to may be understood as a process of determining which one of representative values of the plurality of sub-ranges the sample feature value of the current block is most similar to. Here, the representative value may also be referred to as a centroid value.

Hereinafter, a method of dividing an entire range including candidate values into a plurality of sub-ranges is described with reference to FIGS. 30 to 33.

FIG. 30 is a diagram illustrating a histogram constructed based on sample feature values calculated from a current image, according to an embodiment.

In an embodiment, it is assumed that the sample feature value may have candidate values within an entire range from 10 to 100.

The histogram construction unit 2910 may calculate the sample feature values of the blocks within the current image and identify a frequency at which each of the candidate values is calculated as the sample feature value. In FIG. 30, because a frequency of a candidate value of 90 is the highest, it may be determined that sample feature values of a large number of blocks within the current image are 90.

In an embodiment, the histogram construction unit 2910 updates the frequency of the candidate value whenever the sample feature value of each block within the current image is calculated, and deletes the sample feature value used for updating the frequency from memory, thereby preventing a plurality of sample feature values from being stored in memory.

For example, when the sample feature value of any one block is calculated, the histogram construction unit 2910 may increase the frequency of the candidate value corresponding to the calculated sample feature value and may delete the sample feature value of any one block from memory. The histogram construction unit 2910 may increase the frequency of the candidate value by calculating a sample feature value of a next block.

In an embodiment, the clustering unit 2930 may determine a plurality of temporary representative values within an entire range including candidate values from 10 to 100. The number of temporary representative values may be equal to the number of classes.

The plurality of temporary representative values may be determined by using various methods. For example, candidate values selected in descending order of frequency among the candidate values may be determined as the plurality of temporary representative values. As another example, a plurality of temporary representative values may be determined at equal intervals within an entire range including the candidate values.

Referring to FIG. 30, a first temporary representative value C1 may be determined between 20 and 30, a second temporary representative value C2 may be determined between 50 and 60, and a third temporary representative value C3 may be determined between 80 and 90.

The expression that three temporary representative values C1, C2, and C3 are selected within the entire range may mean that the number of classes is 3.

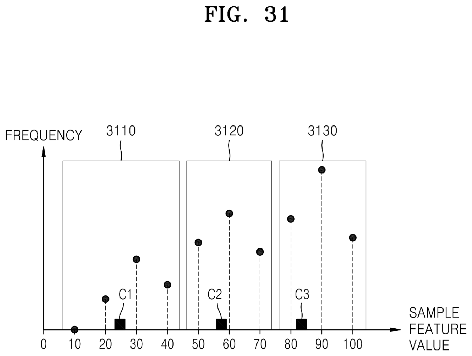

FIG. 31 is a diagram for describing a method of dividing an entire range including candidate values into sub-ranges 3110, 3120, and 3130, based on temporary representative values, according to an embodiment.

The clustering unit 2930 may identify which temporary representative value each of the plurality of candidate value is closest to, based on distances between each of the plurality of candidate values and the temporary representative values C1, C2, and C3. The candidate values identified as being closest to any one temporary representative value may constitute a sub-range corresponding to any one class.

In an embodiment, the distance between the temporary representative value and the candidate value may correspond to the difference between the temporary representative value and the candidate value.

Referring to FIG. 31, a first sub-range 3110 may be identified from candidate values of 10, 20, 30, and 40, which are closest to a first temporary representative value C1, and a second sub-range 3120 may be identified from candidate values of 50, 60, and 70, which are closest to a second temporary representative value C2. In addition, a third sub-range 3130 may be identified from candidate values of 80, 90, and 100, which are closest to a third temporary representative value C3.

In other words, the candidate values of 10, 20, 30, and 40 may be included in one group, the candidate values of 50, 60, and 70 may be included in another group, and the candidate values of 80, 90, and 100 may be included in yet another group.

When the plurality of sub-ranges 3110, 3120, and 3130 are identified based on the plurality of temporary representative values C1, C2, and C3, the clustering unit 2930 may determine new temporary representative values for each of the plurality of sub-ranges 3110, 3120, and 3130.

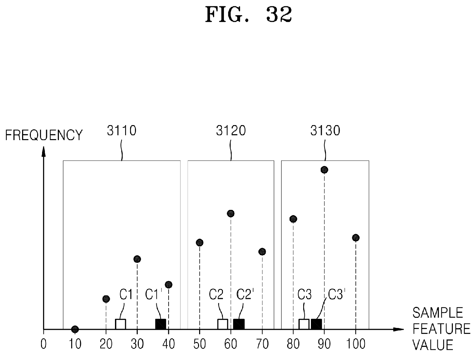

FIG. 32 is a diagram for describing a method of determining new temporary representative values C1', C2', and C3' in the sub-ranges 3110, 3120, and 3130 illustrated in FIG. 31.

In an embodiment, the clustering unit 2930 may determine new temporary representative values C1', C2', and C3' for each of the sub-ranges 3110, 3120, and 3130 by calculating a weighted average of candidate values belonging to the sub-ranges 3110, 3120, and 3130, based on the frequencies thereof. In an embodiment, when determining the new temporary representative values C1', C2', and C3', the frequencies may be applied to the candidate values as weights.

For example, when the frequencies of the candidate values of 50, 60, and 70 included in the second sub-range 3120 are a, b, and c, respectively, the new temporary representative value C2' may be calculated as (50*a+60*b+70*c). In an embodiment, the new temporary representative value C2' may be calculated as (50*a+60*b+70*c)/(a+b+c).

When the new temporary representative values C1', C2', and C3' are determined for each of the plurality of sub-ranges 3110, 3120, and 3130, the clustering unit 2930 may update the sub-ranges 3110, 3120, and 3130 based on the new temporary representative values C1', C2', and C3'.

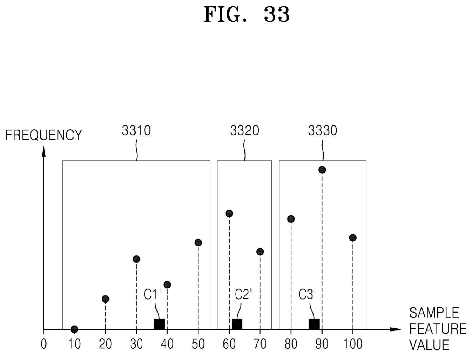

FIG. 33 is a diagram for describing a method of updating the sub-ranges 3110, 3120, and 3130 based on the new temporary representative values C1', C2', and C3' illustrated in FIG. 32.

The clustering unit 2930 may identify which temporary representative value each of the plurality of candidate value is closest to, based on distances between each of the plurality of candidate values and the new temporary representative values C1', C2', and C3'. The candidate values identified as being closest to any one temporary representative value may constitute a sub-range corresponding to any one class.

Referring to FIG. 33, a first sub-range 3310 including candidate values of 10, 20, 30, 40, and 50, which are closest to a first temporary representative value C1', may be identified, and a second sub-range 3320 including candidate values of 60 and 70, which are closest to a second temporary representative value C2', may be identified. In addition, a third sub-range 3330 including candidate values of 80, 90, and 100, which are closest to a third temporary representative value C3', may be identified.

Compared to FIG. 32, it may be seen that the first sub-range 3110 illustrated in FIG. 32 includes four candidate values, and the first sub-range 3310 illustrated in FIG. 33 includes five candidate values. In addition, it may be seen that the second sub-range 3120 illustrated in FIG. 32 includes three candidate values, and the second sub-range 3320 illustrated in FIG. 33 includes two candidate values.

When the new sub-ranges 3310, 3320, and 3330 are identified, the clustering unit 2930 may repeat the process of updating the temporary representative values and the process of updating the sub-ranges, which have been described with reference to FIGS. 32 and 33, until the temporary representative values are no longer changed.

The class determination unit 2950 may determine which representative value the current block corresponds to by comparing the sample feature value of the current block with the plurality of representative values finally determined by the clustering unit 2930.

In an embodiment, the class determination unit 2950 may identify a representative value having a smallest difference from the sample feature value of the current block among the plurality of representative values, and may determine a class corresponding to the identified representative value as a class of the current block.

According to an embodiment, because sub-ranges or representative values are adaptively determined based on the frequencies of the sample feature values calculated in the current image, filtering suitable for characteristics of the current image may be performed for each block.

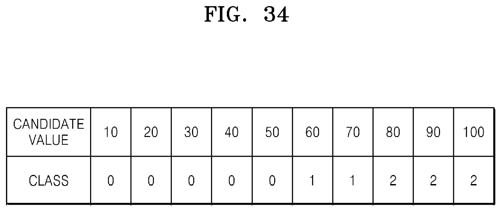

FIG. 34 is a diagram illustrating a look-up table constructed based on a clustering result, according to an embodiment.

In an embodiment, when a plurality of representative values are determined, the clustering unit 2930 may identify in advance which representative value each of the candidate values corresponds to, that is, which class each of the candidate values belongs to.

As illustrated in FIG. 33, when the candidate values of 10, 20, 30, 40, and 50 correspond to the first representative value C1', the clustering unit 2930 may determine that the candidate values of 10, 20, 30, 40, and 50 belong to a class corresponding to the first representative value C1'.

In an embodiment, by constructing a look-up table indicating which class each of the candidate values belongs to, a class to which the current block belongs may be quickly determined.

For example, referring to the look-up table illustrated in FIG. 34, when the sample feature value of the current block is 30, it may be determined that the current block belongs to class 0, and when the sample feature value of the current block is 80, it may be determined that the current block belongs to class 2.

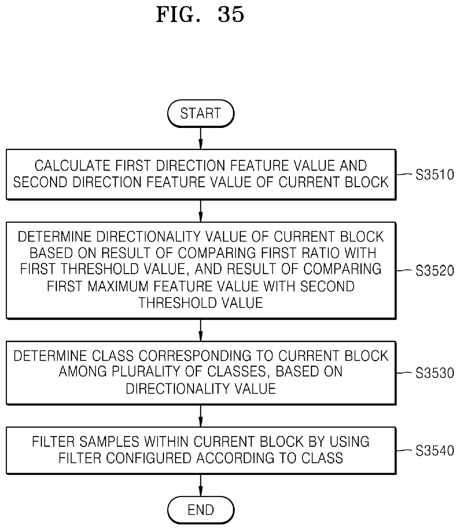

FIG. 35 is a flowchart for describing an image filtering method according to an embodiment.

In operation S3510, the filtering device 2000 may calculate a first direction feature value and a second direction feature value of a current block within a current image.

The first direction feature value may be, for example, a Laplace value in a horizontal direction, and the second direction feature value may be, for example, a Laplace value in a vertical direction. In an embodiment, the first direction feature value may be, for example, a Laplace value in a first diagonal direction, and the second direction feature value may be, for example, a Laplace value in a second diagonal direction.

In an embodiment, the size of the current block may be greater than or equal to 1×1. A block having a size of 1x1 may represent a sample.

In an embodiment, the filtering device 2000 may further obtain a third direction feature value and a fourth direction feature value together with the first direction feature value and the second direction feature value. When the first direction feature value is a Laplace value in the horizontal direction and the second direction feature value is a Laplace value in the vertical direction, the third direction feature value and the fourth direction feature value may be a Laplace value in the first diagonal direction and a Laplace value in the second diagonal direction, respectively. In contrast, when the first direction feature value is a Laplace value in the first diagonal direction and the second direction feature value is a Laplace value in the second diagonal direction, the third direction feature value and the fourth direction feature value may be a Laplace value in the horizontal direction and a Laplace value in the vertical direction, respectively.

In operation S3520, the filtering device 2000 may determine a directionality value of the current block based on a result of comparing a first ratio with a first threshold value and a result of comparing a first maximum feature value with a second threshold value.

The first maximum feature value may represent a larger one of the first direction feature value and the second direction feature value. When a smaller one of the first direction feature value and the second direction feature value is the first minimum feature value, the first ratio may correspond to a ratio between the first maximum feature value and the first minimum feature value.

The first threshold value may correspond to the first threshold value t0 illustrated in FIG. 25, and the second threshold value may correspond to the third threshold value t2.

In an embodiment, when the first ratio is less than the first threshold value or the first maximum feature value is less than the second threshold value, the filtering device 2000 may determine that no directionality exists in the sample values within the current block and may determine the directionality value to be 0.

In an embodiment, when the first ratio is greater than or equal to the first threshold value and the first maximum feature value is greater than or equal to the second threshold value, the filtering device 2000 may determine that directionality exists in the sample values within the current block.

In an embodiment, when the third direction feature value and the fourth direction feature value are further obtained by the filtering device 2000, a larger one of the third direction feature value and the fourth direction feature value may correspond to the second maximum feature value, and a smaller one of the third direction feature value and the fourth direction feature value may correspond to the second minimum feature value. A ratio between the second maximum feature value and the second minimum feature value may correspond to the second ratio.

In an embodiment, the filtering device 2000 may determine the directionality value of the current block based on a result of comparing the first ratio with the first threshold value, a result of comparing the second ratio with the first threshold value, a result of comparing the first maximum feature value with the second threshold value, and a result of comparing the second maximum feature value with the second threshold value.

In an embodiment, when the directionality exists in the sample values within the current block, the filtering device 2000 may determine the directionality value based on a result of comparing a first result value, which is obtained by combining the first ratio with a value obtained by dividing the first maximum feature value by the second maximum feature value, with a second result value, which is obtained by combining the second ratio with a value obtained by dividing the second maximum feature value by the first maximum feature value.

In an embodiment, when the first result value is greater than the second result value and the first ratio is greater than the third threshold value, it may mean that the directionality of the sample values within the current block in the horizontal direction or the vertical direction is strong. In an embodiment, when the first result value is greater than the second result value and the first ratio is less than or equal to the third threshold value, it may mean that the directionality of the sample values within the current block in the horizontal direction or the vertical direction is weak. When the directionality of the sample values within the current block in the horizontal direction or the vertical direction is strong, the directionality value may be determined to be 2, and when the directionality of the sample values within the current block in the horizontal direction or the vertical direction is weak, the directionality value may be determined to be 1.

In an embodiment, when the second result value is greater than the first result value and the second ratio is greater than the third threshold value, it may mean that the directionality of the sample values within the current block in the diagonal direction is strong. In an embodiment, when the second result value is greater than the first result value and the second ratio is less than or equal to the third threshold value, it may mean that the directionality of the sample values within the current block in the diagonal direction is weak. When the directionality of the sample values within the current block in the diagonal direction is strong, the directionality value may be determined to be 4, and when the directionality of the sample values within the current block in the diagonal direction is weak, the directionality value may be determined to be 3.

In operation S3530, the filtering device 2000 may determine a class corresponding to the current block among a plurality of classes, based on the directionality value.

The filtering device 2000 may determine an activity value of the current block and may determine a class corresponding to the current block, based on at least one of the directionality value or the activity value.

In an embodiment, the filtering device 2000 may determine the activity value of the current block from the sum of the first direction feature value and the second direction feature value.

In an embodiment, the filtering device 2000 may determine the activity value of the current block from the sum of the third direction feature value and the fourth direction feature value.

In an embodiment, when a direction of an edge within the current block is determined to be the first direction or the second direction, the filtering device 2000 may determine the activity value of the current block from the sum of the first direction feature value and the second direction feature value (or an average of the first direction feature value and the second direction feature value). When a direction of an edge within the current block is determined to be the third direction or the fourth direction, the filtering device 2000 may determine the activity value of the current block from the sum of the third direction feature value and the fourth direction feature value (or an average of the third direction feature value and the fourth direction feature value).

In an embodiment, when a direction of an edge within the current block is determined to be the first direction or the second direction, the filtering device 2000 may determine the activity value of the current block from the first maximum feature value (or a value obtained by multiplying the first maximum feature value by a predefined weight). When a direction of an edge within the current block is determined to be the third direction or the fourth direction, the filtering device 2000 may determine the activity value of the current block from the second maximum feature value (or a value obtained by multiplying the second maximum feature value by a predefined weight).

In an embodiment, when the class corresponding to the current block is determined, it may be determined that each of the samples of the current block belongs to the class corresponding to the current block. In other words, the class determined for the current block may be shared by the samples within the current block.

In operation S3540, the filtering device 2000 may filter the samples within the current block by using a filter configured according to the class corresponding to the current block.

The filter may include filter coefficients obtained based on the class corresponding to the current block. The current sample may be filtered by applying the filter coefficients to the current sample and neighboring samples thereof.

In an embodiment, when the samples within the current image are filtered, the filtered image may be used as a reference image for a next image. For example, the filtered image may be used as a reference image for inter prediction of a block within the next image.

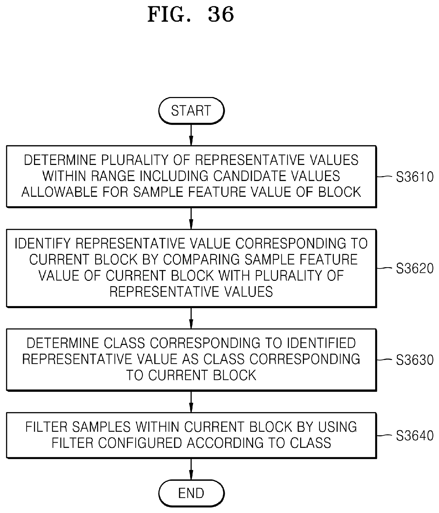

FIG. 36 is a flowchart for describing an image filtering method according to an embodiment.

In an embodiment, it may be said that FIG. 35 illustrates a filtering method in a case where a first classification process is applied to a current block, and FIG. 36 illustrates a filtering method in a case where a second classification process is applied to a current block.

In operation S3610, the filtering device 2000 may determine a plurality of representative values corresponding to a plurality of classes within a range including candidate values allowable for a sample feature value of a block.

The sample feature value of the block may correspond to the sum of sample values within the block or an average of the sample values within the block.

In an embodiment, the filtering device 2000 may determine a plurality of representative values corresponding to a plurality of classes, based on a k-means clustering algorithm.

In an embodiment, the filtering device 2000 may determine a plurality of representative values corresponding to a plurality of classes by repeatedly performing (i) a process of determining temporary representative values and (ii) a process of determining sub-ranges until no change occurs in the temporary representative values.

The process of determining a plurality of representative values is described in more detail. In an embodiment, the filtering device 2000 may select a plurality of temporary representative values within an entire range including candidate values allowable for a sample feature value of a block.

The plurality of temporary representative values may be determined in each of sub-ranges identified based on previous temporary representative values. When the previous temporary representative values do not exist, the plurality of temporary representative values may be determined within the entire range by using various methods. For example, the plurality of temporary representative values may be selected from candidate values according to a predefined criterion. Alternatively, the plurality of temporary representative values may be randomly determined within the entire range.

The filtering device 2000 may divide the entire range into the plurality of sub-ranges respectively corresponding to the plurality of temporary representative values by taking into account the differences between the plurality of temporary representative values and the candidate values.

The filtering device 2000 may determine new temporary representative values for each of the plurality of sub-ranges by calculating a weighted average of candidate values included in each of the plurality of sub-ranges. When the new temporary representative values are identical to the immediately previous temporary representative values, the new temporary representative values may be determined as final representative values. When the new temporary representative values are not identical to the immediately previous temporary representative values, the plurality of sub-ranges may be re-determined based on the new temporary representative values.

In an embodiment, frequencies may be taken into account when calculating a weighted average of candidate values included in each of the plurality of sub-ranges. Here, the frequencies may be frequencies at which the respective candidate values are calculated as sample feature values of blocks within the current image.

In operation S3620, the filtering device 2000 may identify a representative value corresponding to the current block by comparing a sample feature value of the current block with a plurality of representative values.

In an embodiment, the filtering device 2000 may identify, as the representative value corresponding to the current block, a representative value having a smallest difference from the sample feature value of the current block among the plurality of representative values.

In operation S3630, the filtering device 2000 may determine a class corresponding to the identified representative value as a class corresponding to the current block.

In an embodiment, the filtering device 2000 may determine classes respectively corresponding to the candidate values by comparing the plurality of representative values with candidate values allowable for the sample feature value of the block. A correspondence between the candidate values and the classes may be configured as a look-up table. The filtering device 2000 may determine a class corresponding to the sample feature value of the current block, based on the look-up table.

In operation S3640, the filtering device 2000 may filter the samples within the current block by using a filter configured according to the class.

The filter may include filter coefficients obtained based on the class corresponding to the current block. The current sample may be filtered by applying the filter coefficients to the current sample and neighboring samples thereof.

In an embodiment, when the samples within the current image are filtered, the filtered image may be used as a reference image for a next image. For example, the filtered image may be used as a reference image for inter prediction of a block within the next image.

An embodiment is directed to accurately classifying blocks or samples within a current image so as to filter the current image.

An embodiment is directed to improving quality of an image output through a decoding process.

An embodiment is directed to improving encoding and decoding efficiency of a next image when a filtered current image is used as a reference image for the next image.

The technical problems to be solved by the present disclosure are not limited to those described above, and other technical problems that are not described herein will be clearly understood by those of ordinary skill in the art from the following description.

An image filtering method performed by a filtering device 2000, according to an embodiment, may include calculating a first direction feature value and a second direction feature value of a current block within a current image.

The image filtering method performed by the filtering device 2000, according to an embodiment, may include determining a directionality value of the current block based on a result of comparing a first threshold value with a first ratio between a first maximum feature value and a first minimum feature value, and a result of comparing a second threshold value with the first maximum feature value, wherein the first maximum feature value corresponds to a larger one of the first direction feature value and the second direction feature value, and the first minimum feature value corresponds to a smaller one of the first direction feature value and the second direction feature value.

The image filtering method performed by the filtering device 2000, according to an embodiment, may include determining a class corresponding to the current block among a plurality of classes, based on the determined directionality value.

The image filtering method performed by the filtering device 2000, according to an embodiment, may include filtering samples within the current block by using a filter configured according to the determined class.

According to an embodiment, the directionality value of the current block may be more accurately calculated by taking into account the magnitude of the first maximum feature value itself.

In an embodiment, when the first ratio is less than the first threshold value or the first maximum feature value is less than the second threshold value, the directionality value may be determined as a first value.

According to an embodiment, whether an edge exists within the current block may be accurately determined based on the magnitude of the first maximum feature value.

In an embodiment, the image filtering method may further include calculating a third direction feature value and a fourth direction feature value of the current block, wherein a larger one of the third direction feature value and the fourth direction feature value may correspond to a second maximum feature value, and a smaller one of the third direction feature value and the fourth direction feature value may correspond to a second minimum feature value, and when the first ratio is greater than or equal to the first threshold value and the first maximum feature value is greater than or equal to the second threshold value, the determining of the directionality value may include determining the directionality value based on a result of comparing a first result value, which is obtained by combining the first ratio with a value obtained by dividing the first maximum feature value by the second maximum feature value, with a second result value, which is obtained by combining a value obtained by dividing the second maximum feature value by the first maximum feature value with a second ratio between the second maximum feature value and the second minimum feature value.

According to an embodiment, the direction of the edge within the current block may be more accurately determined based on the ratio between the first maximum feature value and the second maximum feature value.

In an embodiment, when the first result value is greater than the second result value, the directionality value may be determined as a second value, and when the first result value is less than or equal to the second result value, the directionality value may be determined as a third value.

According to an embodiment, the directionality value may be determined differently according to the direction of the edge within the current block.

In an embodiment, the determining of the class corresponding to the current block may include determining the class corresponding to the current block among the plurality of classes, based on the determined directionality value and an activity value of the current block. When the first result value is greater than the second result value, the activity value may be determined based on the first maximum feature value, and when the first result value is less than or equal to the second result value, the activity value may be determined based on the second maximum feature value.

According to an embodiment, the activity value may be determined by appropriately taking into account the horizontal/vertical direction characteristics and diagonal direction characteristics of the current block.

In an embodiment, a class indicated by a value obtained by combining the directionality value with the activity value among the plurality of classes may be determined as the class corresponding to the current block.

In an embodiment, the image filtering method may further include selecting a classifier configured to determine the class corresponding to the current block among a plurality of classifiers, wherein, when the classifier is selected as a first classifier, the class corresponding to the current block may be determined based on a directionality value of the current block.

According to an embodiment, because the current block may be classified based on the plurality of classifiers, the classification result may be more accurate.

In an embodiment, when the classifier is selected as a second classifier, the determining of the class corresponding to the current block may include determining a plurality of representative values corresponding to a plurality of classes within a range including candidate values allowable for a sample feature value of a block, identifying a representative value corresponding to the current block by comparing a sample feature value of the current block with the plurality of representative values, and determining a class corresponding to the identified representative value as the class corresponding to the current block.

In an embodiment, the determining of the plurality of representative values may include calculating sample feature values of blocks within the current image, obtaining a frequency at which each of the candidate values is calculated as the sample feature values of the blocks, and determining the plurality of representative values within the range by taking into account each of frequencies of the candidate values.

According to an embodiment, because the plurality of representative values are adaptively determined based on the frequencies of the candidate values, the class of the current block may be more accurately determined.

In an embodiment, the determining of the plurality of representative values may include selecting a plurality of temporary representative values within the range, dividing the range into a plurality of sub-ranges respectively corresponding to the plurality of temporary representative values by taking into account differences between the plurality of temporary representative values and the candidate values, and determining a representative value for each of the plurality of sub-ranges through a weighted average of candidate values included in each of the plurality of sub-ranges.

According to an embodiment, the class of the current block may be more accurately determined through the process of updating the representative values.

In an embodiment, the candidate values included in each of the plurality of sub-ranges may be weighted-averaged based on the frequency.

In an embodiment, when the classifier is selected as a second classifier, the determining of the class corresponding to the current block may include determining a plurality of representative values respectively corresponding to a plurality of classes within a range including candidate values allowable for a sample feature value of a block, determining a class corresponding to each of the candidate values by comparing the candidate values with the plurality of representative values, and determining, as the class corresponding to the current block, the class of the candidate value corresponding to the sample feature value of the current block among the candidate values.

According to an embodiment, the current block may be more quickly classified by constructing a look-up table in advance.

In an embodiment, the sample feature value of the block may be a sum of sample values of samples within the block or an average of the sample values of the samples within the block.

A filtering device 200 according to an embodiment may include a directionality determination unit 2210 configured to calculate a first direction feature value and a second direction feature value of a current block within a current image and determine a directionality value of the current block based on a result of comparing a first threshold value with a first ratio between a first maximum feature value and a first minimum feature value, and a result of comparing a second threshold value with the first maximum feature value, wherein the first maximum feature value corresponds to a larger one of the first direction feature value and the second direction feature value, and the first minimum feature value corresponds to a smaller one of the first direction feature value and the second direction feature value.

The filtering device 200 according to an embodiment may include a class determination unit 2250 configured to determine a class corresponding to the current block among a plurality of classes, based on the determined directionality value.

The filtering device 200 according to an embodiment may include a filter unit 2030 configured to filter samples within the current block by using a filter configured according to the determined class.

According to an embodiment, the directionality value of the current block may be more accurately calculated by taking into account the magnitude of the first maximum feature value itself.

A computer-readable recording medium according to an embodiment may store a bitstream.

In an embodiment, the bitstream may include filter information used to filter a current image according to a filtering method.

In an embodiment, the filtering method may include calculating a first direction feature value and a second direction feature value of a current block within the current image.

In an embodiment, the filtering method may include determining a directionality value of the current block based on a result of comparing a first threshold value with a first ratio between a first maximum feature value and a first minimum feature value, and a result of comparing a second threshold value with the first maximum feature value, wherein the first maximum feature value corresponds to a larger one of the first direction feature value and the second direction feature value, and the first minimum feature value corresponds to a smaller one of the first direction feature value and the second direction feature value.

In an embodiment, the filtering method may include determining a class corresponding to the current block among a plurality of classes, based on the determined directionality value.

In an embodiment, the filtering method may include filtering samples within the current block by using a filter configured according to the determined class.

According to an embodiment, the directionality value of the current block may be more accurately calculated by taking into account the magnitude of the first maximum feature value itself.

In an embodiment, blocks or samples within a current image may be accurately classified so as to filter the current image.

In an embodiment, quality of an image output through a decoding process may be improved.

In an embodiment, encoding and decoding efficiency of a next image may be improved when a filtered current image is used as a reference image for the next image.

Effects to be achieved by the present disclosure are not limited to those described above, and other effects that are not described herein will be clearly understood from the following description by those of ordinary skill in the art.

On the other hand, the embodiments of the present disclosure may be written as a program that is executable on a computer, and the written program may be stored in a machine-readable storage medium.

A machine-readable storage medium may be provided in the form of a non-transitory storage medium. The "non-transitory storage medium" is a tangible device and only means not including a signal (e.g., electromagnetic waves). This term does not distinguish between a case where data is semi-permanently stored in a storage medium and a case where data is temporarily stored in a storage medium. For example, the "non-transitory storage medium" may include a buffer in which data is temporarily stored.

The methods according to various embodiments may be provided by being included in a computer program product. The computer program product may be traded between a seller and a buyer as a commercial product. The computer program product may be distributed in the form of a machine-readable storage medium (e.g., compact disc read-only memory (CD-ROM)), or may be distributed (e.g., downloaded or uploaded) online either via an application store or directly between two user devices (e.g., smartphones). In the case of the online distribution, at least a part of a computer program product (e.g., downloadable app) is stored at least temporarily on a machine-readable storage medium, such as a server of a manufacturer, a server of an application store, or memory of a relay server, or may be temporarily generated.

The technical concept of the present disclosure has been described in detail with reference to preferred embodiments, but the technical concept of the present disclosure is not limited to the above embodiments, and various modifications and variations may be made thereto by those of ordinary skill in the art within the scope of the technical concept of the present disclosure.

## Claims

1. An image filtering method performed by a filtering device (2000), the image filtering method comprising:
calculating a first direction feature value and a second direction feature value of a current block within a current image;
determining a directionality value of the current block based on a result of comparing a first threshold value with a first ratio between a first maximum feature value and a first minimum feature value, and a result of comparing a second threshold value with the first maximum feature value, wherein the first maximum feature value corresponds to a larger one of the first direction feature value and the second direction feature value, and the first minimum feature value corresponds to a smaller one of the first direction feature value and the second direction feature value;
determining a class corresponding to the current block among a plurality of classes, based on the determined directionality value; and
filtering samples within the current block by using a filter configured according to the determined class.

2. The image filtering method of claim 1, wherein, when the first ratio is less than the first threshold value or the first maximum feature value is less than the second threshold value, the directionality value is determined as a first value.

3. The image filtering method of claim 1 or 2, further comprising calculating a third direction feature value and a fourth direction feature value of the current block,
wherein a larger one of the third direction feature value and the fourth direction feature value corresponds to a second maximum feature value, and a smaller one of the third direction feature value and the fourth direction feature value corresponds to a second minimum feature value, and
when the first ratio is greater than or equal to the first threshold value and the first maximum feature value is greater than or equal to the second threshold value, the determining of the directionality value comprises determining the directionality value based on a result of comparing a first result value with a second result value,
wherein the first result value is obtained by combining the first ratio with a value obtained by dividing the first maximum feature value by the second maximum feature value, and
wherein the second result value is obtained by combining a value obtained by dividing the second maximum feature value by the first maximum feature value with a second ratio between the second maximum feature value and the second minimum feature value.

4. The image filtering method of any one of claims 1 to 3, wherein, when the first result value is greater than the second result value, the directionality value is determined as a second value, and
when the first result value is less than or equal to the second result value, the directionality value is determined as a third value.

5. The image filtering method of any one of claims 1 to 4, wherein the determining of the class corresponding to the current block comprises determining the class corresponding to the current block among the plurality of classes, based on the determined directionality value and an activity value of the current block,
when the first result value is greater than the second result value, the activity value is determined based on the first maximum feature value, and
when the first result value is less than or equal to the second result value, the activity value is determined based on the second maximum feature value.

6. The image filtering method of any one of claims 1 to 5, wherein a class indicated by a value obtained by combining the directionality value with the activity value among the plurality of classes is determined as the class corresponding to the current block.

7. The image filtering method of any one of claims 1 to 6, further comprising selecting a classifier, among a plurality of classifiers, configured to determine the class corresponding to the current block,
wherein, when the classifier is selected as a first classifier, the class corresponding to the current block is determined based on a directionality value of the current block.

8. The image filtering method of any one of claims 1 to 7, wherein, when the classifier is selected as a second classifier, the determining of the class corresponding to the current block comprises:
determining a plurality of representative values corresponding to a plurality of classes within a range including candidate values allowable for a sample feature value of a block;
identifying a representative value corresponding to the current block by comparing a sample feature value of the current block with the plurality of representative values; and
determining a class corresponding to the identified representative value as the class corresponding to the current block.

9. The image filtering method of any one of claims 1 to 8, wherein the determining of the plurality of representative values comprises:
calculating sample feature values of blocks within the current image;
obtaining a frequency at which each of the candidate values is calculated as the sample feature values of the blocks; and
determining the plurality of representative values within the range by taking into account each of frequencies of the candidate values.

10. The image filtering method of any one of claims 1 to 9, wherein the determining of the plurality of representative values comprises:
selecting a plurality of temporary representative values within the range;
dividing the range into a plurality of sub-ranges respectively corresponding to the plurality of temporary representative values by taking into account differences between the plurality of temporary representative values and the candidate values; and
determining a representative value for each of the plurality of sub-ranges through a weighted average of candidate values included in each of the plurality of sub-ranges.

11. The image filtering method of any one of claims 1 to 10, wherein the candidate values included in each of the plurality of sub-ranges are weighted-averaged based on the frequency.

12. The image filtering method of any one of claims 1 to 11, wherein, when the classifier is selected as a second classifier, the determining of the class corresponding to the current block comprises:
determining a plurality of representative values respectively corresponding to a plurality of classes within a range including candidate values allowable for a sample feature value of a block;
determining a class corresponding to each of the candidate values by comparing the candidate values with the plurality of representative values; and
determining, as the class corresponding to the current block, the class of the candidate value corresponding to the sample feature value of the current block among the candidate values.

13. The image filtering method of any one of claim 1 to 12, wherein the sample feature value of the block is a sum of sample values of samples within the block or an average of the sample values of the samples within the block.

14. An image filtering device comprising:
a directionality determination unit (2210) configured to:
calculate a first direction feature value and a second direction feature value of a current block within a current image; and
determine a directionality value of the current block based on a result of comparing a first threshold value with a first ratio between a first maximum feature value and a first minimum feature value, and a result of comparing a second threshold value with the first maximum feature value, wherein the first maximum feature value corresponds to a larger one of the first direction feature value and the second direction feature value, and the first minimum feature value corresponds to a smaller one of the first direction feature value and the second direction feature value;
a class determination unit (2250) configured to determine a class corresponding to the current block among a plurality of classes, based on the determined directionality value; and
a filter unit (2030) configured to filter samples within the current block by using a filter configured according to the determined class.

15. A method of transmitting a bitstream generated according to the image filtering method of claim 1.
